(19) Europäisches Patentamt
European Patent Office
Office européen des brevets

(11) EP 3 765 531 B1

(12) EUROPÄISCHE PATENTSCHRIFT

(45) Veröffentlichungstag und Bekanntmachung des Hinweises auf die Patenterteilung:
**28.08.2024 Patentblatt 2024/35**

(21) Anmeldenummer: **19709507.8**

(22) Anmeldetag: **13.03.2019**

(51) Internationale Patentklassifikation (IPC):
***C08F 2/22*** *(2006.01)* ***C08F 220/14*** *(2006.01)*
***C09D 133/12*** *(2006.01)*

(52) Gemeinsame Patentklassifikation (CPC):
(C-Sets verfügbar)
**C08F 2/22; C08F 220/14; C09D 133/12** (Forts.)

(86) Internationale Anmeldenummer:
**PCT/EP2019/056238**

(87) Internationale Veröffentlichungsnummer:
**WO 2019/175212 (19.09.2019 Gazette 2019/38)**

(54) **WÄSSRIGE BINDEMITTEL**

AQUEOUS BINDERS

LIANTS AQUEUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.03.2018 EP 18161901**

(43) Veröffentlichungstag der Anmeldung:
**20.01.2021 Patentblatt 2021/03**

(73) Patentinhaber: **BASF SE**
**67056 Ludwigshafen am Rhein (DE)**

(72) Erfinder:
- **GASCHLER, Wolfgang**
  **67056 Ludwigshafen (DE)**
- **ENCK, Sebastian**
  **Jakarta, 11750 (ID)**

(74) Vertreter: **BASF IP Association**
**BASF SE**
**GBI-C006**
**67056 Ludwigshafen (DE)**

(56) Entgegenhaltungen:
**WO-A1-2009/135812**
**WO-A1-2017/017090**
**WO-A1-2017/140520**
**US-A1- 2012 252 972**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)

C-Sets
**C08F 220/14, C08F 212/18, C08F 220/1804, C08F 220/06**

## Beschreibung

Gegenstand der vorliegenden Erfindung ist ein Verfahren zur Herstellung einer wässrigen Polymerisatdispersion durch radikalisch initiierte Emulsionspolymerisation, welches dadurch gekennzeichnet ist, dass wenigstens eine ethylenisch ungesättigte Verbindung (Monomer P) in Anwesenheit eines Copolymerisats A in einem wässrigen Medium radikalisch polymerisiert wird, wobei
a) das Copolymerisat A in einpolymerisierter Form aufgebaut ist aus

| | |
|---|---|
| ≥ 10 und ≤ 50 Gew.-% | wenigstens einer $\alpha,\beta$-monoethylenisch ungesättigten $C_3$- bis $C_6$-Monocarbonsäure (Monomere A1), |
| ≥ 50 und ≤ 90 Gew.-% | wenigstens einer anderen monoethylenisch ungesättigten Verbindung (Monomere A2), |

wobei sich die Mengen der Monomeren A1 und A2 auf 100 Gew.-% (Gesamtmonomerenmenge A) aufsummieren, und wobei

- das Copolymerisat A ein gewichtsmittleres Molekulargewicht im Bereich ≥ 5.000 und ≤ 20.000 g/mol aufweist,
- die Art und Mengen der Monomeren A1 und A2 so gewählt werden, dass das erhaltene Copolymerisat A eine Glasübergangstemperatur Tg gemessen nach DIN EN ISO 11357-2 (2013-09) im Bereich ≥ 70 °C aufweist, und wobei
- das Copolymerisat A vorab der Zugabe und der radikalischen Polymerisation des wenigstens einen Monomeren P in einem wässrigen Medium mit einer Metallverbindung M, ausgewählt aus der Gruppe umfassend Oxide, Hydroxide, Carbonate oder Hydrogencarbonate von Magnesium, Kalzium oder Zink und einer Base B, welche sich von der Metallverbindung M unterscheidet, derart umgesetzt wird, dass
- ≥ 50 mol-% der im Copolymerisat A enthaltenen Carboxygruppen durch die Base B neutralisiert sind, und
- die Menge der Metallverbindung M 0,01 bis 5 Gew.-%, bezogen auf die Menge an Copolymerisat A beträgt,

b) die Art und Menge des wenigstens einen Monomeren P so gewählt wird, dass das erhaltene Dispersionspolymerisat P eine Glasübergangstemperatur Tg gemessen nach DIN EN ISO 11357-2 (2013-09) im Bereich ≥ - 30 und ≤ 90 °C aufweist, und wobei
c) das Verhältnis der Gewichtsmengen an Copolymerisat A zu dem zur Herstellung des Dispersionspolymerisates P eingesetzten wenigstens einen Monomeren P im Bereich ≥ 15 und ≤ 60 zu ≥ 40 und ≤ 85 liegt.

Gegenstand der vorliegenden Erfindung sind ferner die nach dem erfindungsgemäßen Verfahren zugänglichen wässrigen Polymerisatdispersionen selbst, die daraus erhältlichen Polymerisatpulver, die Verwendung der wässrigen Polymerisatdispersionen und der Polymerisatpulver in den unterschiedlichsten Anwendungsgebieten sowie wässrige Anstrich- und Beschichtungsformulierungen, welche die genannten wässrigen Polymerisatdispersionen oder Polymerisatpulver enthalten.

Mehrwertige Metallkationen werden häufig in wässrigem Medium vorliegenden säuregruppenhaltigen Polymeren oder Copolymeren zugesetzt um die physikalischen und/oder chemischen Eigenschaften der wässrigen Zusammensetzungen bzw. der daraus zugänglichen Polymerfilme zu verbessern. Beispielsweise können mehrwertige Metallkationen wässrigen Polymersystemen zugesetzt werden, deren Polymere oder Copolymere Säuregruppen, wie beispielsweise Carbonsäure-, Sulfonsäure- oder Phosphorsäuregruppen, enthalten, wodurch die entsprechenden Säuregruppen vollständig oder teilweise neutralisiert werden. Die dabei erhaltenen ionischen Bindungen können bei einer Filmbildung zu einer Vernetzung der Polymer- oder Copolymerketten führen. Problematisch an der Zugabe von mehrwertigen Metallkationen zu wässrigen Polymersystemen, deren Polymere oder Copolymere Säuregruppen aufweisen, ist jedoch, dass die wässrigen Polymersysteme durch die mehrwertigen Metallkationen destabilisiert werden können, was zu einer unerwünschten Gelpartikelbildung führt, welche bei der Filmbildung stört.

In einer gemäß der WO 2002/055563 offenbarten Verfahrensweise werden Metallkationen enthaltende wässrige Polymerdispersionen hergestellt, indem die Gesamtmenge der Metallkationen sowie wenigstens eine Teilmenge eines säuregruppenhaltigen ethylenisch ungesättigten Monomeren in einem dispergiermittelhaltigen wässrigen Medium unter Komplexbildung vorgelegt und daran anschließend die verbleibende Menge des säuregruppenhaltigen ethylenisch ungesättigten Monomeren gemeinsam mit der Gesamtmenge der nichtsäuregruppenhaltigen ethylenisch ungesättigten Monomeren unter Polymerisationsbedingungen zudosiert werden. Nachteilig an der offenbarten Verfahrensweise ist jedoch, dass große Mengen an Dispergiermittel erforderlich sind und die erhaltenen wässrigen Polymerisatdispersionen unerwünschte Gelpartikel (Koagulat) aufweisen.

Aufgabe der vorliegenden Erfindung war es daher ein verbessertes Verfahren zur Herstellung von Metallkationen enthaltende wässrige Polymerisatdispersionen zur Verfügung zu stellen, welches einfach durchzuführen ist und zu feinteiligen wässrigen Polymerisatdispersionen führt, welche keinen oder einen niedrigeren Gehalt von Koagulat aufweisen und welche in der Anwendung eine hohe Naßtransparenz aufweisen und widerstandsfähige Beschichtungen, insbesondere gegen Fleckenbildung ermöglichen.

Die Aufgabe wurde durch die Bereitstellung des eingangs definierten Verfahrens sowie der daraus erhältlichen wässrigen Polymerisatdispersionen gelöst.

Das erfindungsgemäß eingesetzte Copolymerisat A, ist in einpolymerisierter Form aufgebaut aus

| | |
|---|---|
| ≥ 10 und ≤ 50 Gew.-% | wenigstens einer α,β-monoethylenisch ungesättigten $C_3$- bis $C_6$-Monocarbonsäure (Monomere A1), und |
| ≥ 50 und ≤ 90 Gew.-% | wenigstens einer anderen monoethylenisch ungesättigten Verbindung (Monomere A2), |

wobei sich die Mengen der Monomeren A1 und A2 auf 100 Gew.-% (Gesamtmonomerenmenge A) aufsummieren.

Bei den Monomeren A1 handelt es sich um α,β-monoethylenisch ungesättigte $C_3$- bis $C_6$-, bevorzugt $C_3$- oder $C_4$-Monocarbonsäuren sowie deren mit einer Base B voll- oder teilneutralisierten wasserlöslichen Salze. Genannt seien beispielsweise Acrylsäure, Methacrylsäure, Ethylacrylsäure, Allylessigsäure, Crotonsäure oder Vinylessigsäure. Bevorzugt ist das Monomer A1 ausgewählt aus der Gruppe umfassend Acrylsäure, Methacrylsäure und/oder Crotonsäure. Mit besonderem Vorteil enthält das Copolymerisat A als Monomere A1 jedoch Acrylsäure und/oder Methacrylsäure in einpolymerisierter Form.

Als Monomere A2 kommen prinzipiell alle ethylenisch ungesättigten Monomere in Betracht, welche sich von den Monomeren A1 unterscheiden und mit diesen copolymerisierbar sind.

Mit Vorteil enthält das Copolymerisat A als Monomere A2 in einpolymerisierter Form jedoch

| | |
|---|---|
| ≥ 25 und ≤ 90 Gew.-% | wenigstens einer monoethylenisch ungesättigten aromatischen Verbindung (Monomere A2-1), und |
| ≥ 0 und ≤ 65 Gew.-% | wenigstens einer anderen monoethylenisch ungesättigten Verbindung, welche sich von den Monomeren A1 und A2-1 unterscheidet (Monomere A2-2), |

bezogen auf die Gesamtmonomerenmenge A, wobei sich die Mengen der Monomeren A2-1 und A2-2 auf minimal 50 Gew.-% und maximal 90 Gew.-% der Gesamtmonomerenmenge A aufsummieren.

Als Monomere A2-1 kommen prinzipiell alle monoethylenisch ungesättigten aromatischen Verbindungen in Betracht, wie beispielsweise Styrol, α-Methylstyrol, o-Chlorstyrol sowie o-, m- oder p-Vinyltoluol. Mit besonderem Vorteil enthält das Copolymerisat A als Monomere A2-1 Styrol und/oder α-Methylstyrol in einpolymerisierter Form.

Als Monomere A2-2 kommen prinzipiell alle anderen monoethylenisch ungesättigten Verbindung in Betracht, welche sich von den Monomeren A1 und A2-1 unterscheiden. Als Monomere A2-2 beispielhaft genannt seien Vinylhalogenide, wie Vinylchlorid oder Vinylidenchlorid, Ester aus Vinylalkohol und 1 bis 18 C-Atome, bevorzugt 2 bis 12 C-Atome aufweisenden Monocarbonsäuren, wie Vinylacetat, Vinylpropionat, Vinyl-n-butyrat, Vinyllaurat und Vinylstearat, $C_1$- bis $C_{12}$-Alkylvinylether, wie Methylvinylether, Ethylvinylether, n-Propylvinylether, n-Butylvinylether, n-Pentylvinylether, n-Hexylvinylether, Ester aus vorzugsweise 3 bis 6 C-Atome aufweisenden α, β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl-, pentyl-, -hexyl-, -heptyl-, - octyl-, -nonyl-, -decyl- und -2-ethylhexylester, Fumar- und Maleinsäuredimethylester oder -di-n-butylester, Nitrile α,β-monoethylenisch ungesättigter Carbonsäuren, wie Acrylnitril, Methacrylnitril, Fumarsäuredinitril, Maleinsäuredinitril sowie $C_{4-8}$-konjugierte Diene, wie 1,3-Butadien (Butadien). Die vorgenannten Monomere bilden in der Regel ≥ 90 Gew.-%, bevorzugt ≥ 95 Gew.-% und insbesondere bevorzugt ≥ 98 Gew.-% der Gesamtmenge aller Monomeren A2-2 und stellen somit die Hauptmonomeren A2-2 dar. Erfindungsgemäß bevorzugt enthält das Copolymerisat A als Hauptmonomer A2-2 jedoch wenigstens einen Ester der Acrylsäure oder Methacrylsäure mit einem $C_1$- bis $C_{12}$-Alkohol, insbesondere Methylacrylat, Ethylacrylat, n-Butylacrylat, 2-Ethylhexylacrylat und/oder Methylmethacrylat, bevorzugt jedoch Methylmethacrylat, n-Butylacrylat und/oder 2-Ethylhexylacrylat in einpolymerisierter Form.

Weiterhin kommen als Monomere A2-2 im untergeordnetem Maße solche ethylenisch ungesättigten Monomere in Betracht, die entweder wenigstens eine Sulfonsäuregruppe und/oder deren entsprechendes Anion bzw. wenigstens eine Amino-, Amido-, Ureido- oder N-heterocyclische Gruppe und/oder deren am Stickstoff protonierten oder alkylierten Ammoniumderivate enthalten. Beispielhaft genannt seien Acrylamid und Methacrylamid, ferner Vinylsulfonsäure, 2-Acrylamido-2-methylpropansulfonsäure, Styrolsulfonsäure und deren wasserlösliche Salze sowie N-Vinylpyrrolidon, 2-Vinylpyridin, 4-Vinylpyridin, 2-Vinylimidazol, 2-(N,N-Dimethylamino)ethylacrylat, 2-(N,N-Dimethylamino)ethylmethacrylat, 2-(N,N-Diethylamino)ethylacrylat, 2-(N,N-Diethylamino)ethylmethacrylat, 2-(N-tert.-Butylamino)ethylmethacrylat, N-(3-N',N'-Dimethylaminopropyl)methacrylamid und 2-(1-Imidazolin-2-onyl)ethylmethacrylat. Die vorgenannten Monomere A2-2 weisen in der Regel einen Anteil ≤ 10 Gew.-%, bevorzugt ≤ 5 Gew.-% und insbesondere ≤ 2 Gew.-%, jeweils bezogen auf die Gesamtmenge an einpolymerisierten Monomeren A2-2, auf. Mit Vorteil sind jedoch keine derartigen ethylenisch ungesättigten Monomere A2-2 einpolymerisiert.

Monomere A2-2, die üblicherweise die innere Festigkeit der Verfilmungen einer Polymermatrix erhöhen, weisen normalerweise wenigstens eine Epoxy-, wenigstens eine Carbonylgruppe oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit $\alpha,\beta$-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylat und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. Die vorgenannten Monomere A2-2 weisen in der Regel einen Anteil ≤ 10 Gew.-%, bevorzugt ≤ 5 Gew.-% und insbesondere ≤ 2 Gew.-%, jeweils bezogen auf die Gesamtmenge an einpolymerisierten Monomeren A2-2, auf. Mit Vorteil sind jedoch keine derartigen ethylenisch ungesättigten Monomere A2-2 einpolymerisiert.

Mit besonderem Vorteil enthält das Copolymerisat A als Monomere A2-2 Methylmethacrylat, n-Butylacrylat und/oder 2-Ethylhexylacrylat und insbesondere Methylmethacrylat und n-Butylacrylat in einpolymerisierter Form.

Das Copolymerisat A enthält daher vorteilhaft als Monomere A1 Acrylsäure und/oder Methacrylsäure, als Monomere A2-1 Styrol und/oder $\alpha$-Methylstyrol und als Monomere A2-2 Methylmethacrylat, n-Butylacrylat und/oder 2-Ethylhexylacrylat in einpolymerisierter Form.

Das Copolymerisat A enthält erfindungsgemäß vorteilhaft ≥ 10 und ≤ 45 Gew.-% an Monomeren A1, ≥ 25 und ≤ 65 Gew.-% an Monomeren A2-1 und ≥ 0 und ≤ 65 Gew.-% an Monomeren A2-2 in einpolymerisierter Form.

Erfindungsgemäß vorteilhaft ist das Copolymerisat A in einpolymerisierter Form aufgebaut ist aus

| | |
|---|---|
| ≥ 10 und ≤ 45 Gew.-% | Acrylsäure, |
| ≥ 25 und ≤ 65 Gew.-% | Styrol, |
| ≥ 0 und ≤ 40 Gew.-% | $\alpha$-Methylstyrol, und |
| ≥ 0 und ≤ 65 Gew.-% | Methylmethacrylat, n-Butylacrylat und/oder 2-Ethylhexylacrylat. |

Erfindungsgemäß werden die Art und Mengen der Monomeren A1 und A2 (bzw. A2-1 und A2-2) bei der Herstellung des Copolymerisats A so gewählt, dass das erhaltene Copolymerisat A eine Glasübergangstemperatur Tg gemessen nach DIN EN ISO 11357-2 (2013-09) im Bereich ≥ 70 °C, vorteilhaft im Bereich ≥ 80 und ≤ 150 °C bzw. ≥ 90 und ≤ 130 °C aufweist.

Erfindungsgemäß von Bedeutung ist ferner, dass das Copolymerisat A ein gewichtsmittleres Molekulargewicht im Bereich ≥ 5.000 und ≤ 20.000 g/mol und insbesondere vorteilhaft im Bereich ≥ 5.500 und ≤ 18.000 g/mol aufweist. Dabei soll im Rahmen dieser Schrift die Bestimmung des gewichtsmittleren Molekulargewichts mittels Gelpermeationschromatographie unter Verwendung definierter Polystyrolstandards gelöst in Tetrahydrofuran zur Kalibrierung erfolgen.

Die Herstellung des Copolymerisats A ist dem Fachmann geläufig und erfolgt beispielsweise durch radikalisch initiierte Lösungs-, Dispersions- oder Substanzpolymerisation der entsprechenden Mengen an ethylenisch ungesättigten Monomeren A1 und A2 unter Verwendung einer radikalinitiierenden Verbindung (Radikalinitiator), wie sie beispielsweise in der WO 2017/017090, Seite 12, Zeilen 1 bis 25 offenbart sind und einer entsprechenden Menge von radikalkettenübertragenden Verbindungen (Radikalkettenregler), wie sie beispielsweise in der WO 2017/017090, Seite 13, Zeile 31 bis Seite 14, Zeile 12 offenbart sind oder durch radikalisch initiierte Lösungs- oder Substanzpolymerisation bei Temperaturen ≥ 150 °C. Vorteilhaft erfolgt die radikalisch initiierte Lösungs- oder Substanzpolymerisation bei diesen erhöhten Temperaturen in einem Rohrreaktor, einem kontinuierlich betriebenen Rührkessel oder einer kontinuierlich betriebenen Rührkesselkaskade (siehe hierzu beispielsweise US-A 4414370, US-A 4529787, US-A 4546160, US-B 9238699). Bevorzugt erfolgt die Herstellung Copolymerisats A jedoch in Substanz oder ggf. in Anwesenheit eines Lösungsmittels durch Polymerisation der Monomeren A1 und A2 bei einer Temperatur ≥ 160 und ≤ 310 °C, besonders vorteilhaft bei einer Temperatur im Bereich ≥ 180 und ≤ 250 °C mittels wenigstens eines kontinuierlich betriebenen Rührkesselreaktors. Werden bei dieser Hochtemperaturfahrweise Lösungsmittel eingesetzt, so werden bei der Reaktionstemperatur inerte Lösungsmittel, wie beispielsweise Xylol, Toluol, Ethylbenzol, Aromatengemische (wie beispielsweise Aromatic-100®, Aromatic-150® oder Aromatic-200®, erhältlich von Exxon), Aceton, Methylethylketon, N-Methylpyrrolidon und/oder Carbitol gewählt, deren Menge in der Regel ≤ 40 Gew.-%, oft ≥ 5 und ≤ 15 Gew.-%, bezogen auf die Gesamtmonomerenmenge A beträgt. Vorteilhaft erfolgt die Polymerisation unter Druckbedingungen bei 1 bis 10 bar (Überdruck) und einer mittleren Verweilzeit von ≥ 2 und ≤ 30 Minuten, wobei eine mittlere Verweilzeit von ≥ 10 und ≤ 25 Minuten bevorzugt ist. Mit besonderem Vorteil wird das aus dem wenigstens einen kontinuierlich betriebenen Rührkesselreaktor austretende Polymerisationsgemisch direkt über einen ebenfalls kontinuierlich betriebenen Fallfilmverdampfer geführt, in dem die gegebenenfalls nicht umgesetzten Monomeren A1 und A2 sowie gegebenenfalls vorhandenes Lösungsmittel abdestilliert werden, wobei das erhaltene Copolymerisat A häufig als feinteilige Flocken anfällt. Entsprechende Produkte werden seitens BASF SE unter dem Markennamen Joncryl® vermarktet.

Erfindungsgemäß wird das Copolymerisat A vorab der Zugabe und der radikalischen Polymerisation des wenigstens einen Monomeren P in einem wässrigen Medium mit einer Metallverbindung M, ausgewählt aus der Gruppe umfassend Oxide, Hydroxide, Carbonate oder Hydrogencarbonate von Magnesium, Kalzium oder Zink und einer Base B, welche sich von der Metallverbindung M unterscheidet, derart umgesetzt, dass ≥ 50 mol-% der im Copolymerisat A enthaltenen Carboxygruppen durch die Base B neutralisiert sind, und die Menge der Metallverbindung M 0,01 bis 5 Gew.-%, bezogen auf die Menge an Copolymerisat A beträgt.

Erfindungsgemäß ist die Metallverbindung M ausgewählt aus der Gruppe umfassend Oxide, Hydroxide, Carbonate oder Hydrogencarbonate von Magnesium, Kalzium oder Zink, wie beispielsweise Magnesiumoxid [MgO], Magnesiumhydroxid [$Mg(OH)_2$], Magnesiumcarbonat [$MgCO_3$], Magnesiumhydrogencarbonat [$Mg(HCO_3)_2$], Kalziumoxid [CaO], Kalziumhydroxid [$Ca(OH)_2$], Kalziumcarbonat [$CaCO_3$], Kalziumhydrogencarbonat [$Ca(HCO_3)_2$], Zinkoxid [ZnO], Zinkhydroxid [$Zn(OH)_2$], Zinkcarbonat [ZnCOs], Zinkhydrogencarbonat [$Zn(HCO_3)_2$] sowie gegebenenfalls entsprechend vorliegende Hydratverbindungen. Bevorzugt finden Kalziumhydroxid, Kalziumoxid, Magnesiumcarbonat und/oder Zinkoxid Verwendung, wobei jedoch Kalziumhydroxid insbesondere bevorzugt ist.

Dabei beträgt die Menge an Metallverbindung M 0,01 bis 5 Gew.-%, vorteilhaft 0,05 bis 2,5 Gew.-% und insbesondere vorteilhaft 0,1 bis 1,0 Gew.-%, jeweils bezogen auf die Menge an Copolymerisat A.

Als Basen B können alle anorganischen oder organischen Verbindungen mit einem pKa-Wert > 5 eingesetzt werden, welche sich sich von der wenigstens einen Metallverbindung M unterscheiden, wie beispielsweise Alkalimetallhydroxide, -carbonate oder -hydrogencarbonate, wie insbesondere Natriumhydroxid [NaOH] oder Kaliumhydroxid [KOH], Natriumhydrogencarbonat [NaHCOs] oder Kaliumhydrogencarbonat [KHCOs], Natriumcarbonat [$Na_2CO_3$] oder Kaliumcarbonat [$K_2CO_3$], Ammoniumhydroxid [$NH_4OH$], -carbonat [$(NH_4)_2CO_3$] oder -hydrogencarbonat [$NH_4HCO_3$] sowie gegebenenfalls entsprechend vorliegende Hydratverbindungen, primäre, sekundäre oder tertiäre organische Amine, wie beispielsweise Methylamin, Ethylamin, Propylamin-1, Propylamin-2, n-Butylamin-1, n-Butylamin-2, 2-Methylpropylamin-1, 2-Methylpropylamin-2 etc., Dimethylamin, Diethylamin, Di-n-propylamin, Di-iso-propylamin, Di-n-butylamin, Di-2-methylpropylamin etc., Trimethylamin, Triethylamin, Tri-n-propylamin, Tri-iso-propylamin, Tri-n-butylamin, Tri-2-methylpropylamin etc., aber auch gemischte Amine, wie N-Methyl-N-ethylamin, N,N-Dimethyl-N-ethylamin etc. Mit Vorteil werden Ammoniumhydroxid und/oder ein organisches Amin eingesetzt. Mit besonderem Vorteil werden jedoch zur Neutralisation der Carboxygruppen des Copolymerisats A solche Basen eingesetzt, welche einen Siedepunkt von ≤ 110 °C, vorteilhaft ≤ 50 °C und insbesondere vorteilhaft ≤ 0 °C bei einem Druck von 1,013 bar (absolut) aufweisen. Bevorzugt wird jedoch insbesondere Ammoniumhydroxid eingesetzt, welches sich in wässrigem Medium - ebenso wie Ammoniumcarbonat und Ammoniumhydrogencarbonat im Gleichgewicht mit Ammoniak (in hydratisierter Form) befindet. Ammoniak hat einen Siedepunkt von ≤ 0 °C bei einem Druck von 1,013 bar (absolut).

Erfindungsgemäß wird die Menge an Base B so bemessen, dass ≥ 50 mol-% und ≤ 150 mol-%, vorteilhaft ≥ 60 mol-% und ≤ 120 mol-% und insbesondere vorteilhaft ≥ 70 mol-% und ≤ 100 mol-% der im Copolymerisat A enthaltenen Carboxygruppen durch die Base B neutralisiert sind.

Vor dem Hintergrund, dass auch die Metallverbindung M basische Eigenschaften aufweist und zur Neutralisation der Carboxygruppen beitragen kann, soll daher im Rahmen dieser Schrift der Begriff "durch die Base B neutralisiert sind" bedeuten, dass die zugesetzte Menge an Base B so bemessen ist, dass sie ausreicht um ≥ 50 mol-% und ≤ 150 mol-%, vorteilhaft ≥ 60 mol-% und ≤ 120 mol-% und insbesondere vorteilhaft ≥ 70 mol-% und ≤ 100 mol-% der im Copolymerisat A enthaltenen Carboxygruppen zu neutralisieren.

In einer Ausführungsform wird verfahrensgemäß vorab der Zugabe des wenigstens einen Monomeren P in einer separaten Verfahrensstufe in einem Reaktionsgefäß

# Wasser, insbesondere entionisiertes Wasser, die Gesamtmenge der wenigstens einen Metallverbindung M, die Gesamtmenge des Copolymerisats A, vorteilhaft in pulver- bzw. flockenförmiger Form sowie die Gesamtmenge an Base B, bei Raumtemperatur (20 bis 25 °C) unter Rühren vorgelegt, danach

# gegebenenfalls das Reaktionsgefäß mit Stickstoff inertisiert, danach

# die wässrige Copolymerisat A/Metallverbindung M/Base B-Mischung gegebenenfalls einige Zeit bei Raumtemperatur gerührt und anschließend unter Rühren auf eine Temperatur ≥ 50 und ≤ 90 °C aufgeheizt, danach

# das erhaltene Reaktionsgemisch bei dieser Temperatur unter Rühren solange belassen, bis sich das Copolymerisat A zumindest teilweise, vorteilhaft vollständig aufgelöst hat und danach

# das erhaltene Reaktionsgemisch auf Raumtemperatur abkühlt und gegebenenfalls über einen 125 μm Filter filtriert.

Die erfindungsgemäße radikalisch initiierte Emulsionspolymerisation des wenigstens einen Monomer P erfolgt in einem wässrigen Medium in Anwesenheit eines Copolymerisats A, welches mit einer Metallverbindung M und einer Base B in einem wässrigen Medium umgesetzt wurde, wobei die Art und Menge des wenigstens einen Monomeren P so gewählt wird, dass das erhaltene Dispersionspolymerisat P eine Glasübergangstemperatur Tg gemessen nach DIN EN ISO 11357-2 (2013-09) im Bereich ≥ - 30 und ≤ 90 °C aufweist.

Die Durchführung von radikalisch initiierten Emulsionspolymerisationen von ethylenisch ungesättigten Verbindungen (Monomere) in einem wässrigen Medium ist vielfach vorbeschrieben und dem Fachmann daher hinreichend bekannt [vgl. hierzu Emulsionspolymerisation in Encyclopedia of Polymer Science and Engineering, Vol. 8, Seiten 659 ff. (1987); D.C. Blackley, in High Polymer Latices, Vol. 1, Seiten 35 ff. (1966); H. Warson, The Applications of Synthetic Resin Emulsions, Kapitel 5, Seiten 246 ff. (1972); D. Diederich, Chemie in unserer Zeit 24, Seiten 135 bis 142 (1990); Emulsion Polymerisation, Interscience Publishers, New York (1965); DE-A 40 03 422 und Dispersionen synthetischer Hochpolymerer, F. Hölscher, Springer-Verlag, Berlin (1969)]. Die radikalisch initiierte wässrige Emulsionspolymerisation erfolgt üblicherweise dergestalt, dass man die Monomere, in der Regel unter Mitverwendung von Dispergierhilfsmitteln, wie Emulgatoren und/oder Schutzkolloiden, in wässrigem Medium dispers verteilt und mittels wenigstens eines wasserlöslichen radikalischen Polymerisationsinitiators polymerisiert. Häufig werden bei den erhaltenen wässrigen Polymerisatdispersionen die Restgehalte an nicht umgesetzten Monomeren durch dem Fachmann ebenfalls bekannte chemische und/oder physikalische Methoden [siehe beispielsweise EP-A 771328, DE-A 19624299, DE-A 19621027, DE-A 19741184, DE-A 19741187, DE-A 19805122, DE-A 19828183, DE-A 19839199, DE-A 19840586 und 19847115] herabgesetzt, der Polymerisatfeststoffgehalt durch Verdünnung oder Aufkonzentration auf einen gewünschten Wert eingestellt oder der wässrigen Polymerisatdispersion weitere übliche Zusatzstoffe, wie beispielsweise schaum- oder viskositätsmodifizierende Additive zugesetzt. Von dieser allgemeinen Verfahrensweise unterscheidet sich die Herstellung einer erfindungsgemäßen wässrigen Polymerisatdispersion lediglich dadurch, dass die Monomeren in Art und Menge so gewählt werden, dass die gebildeten Dispersionspolymerisate P eine Glasübergangstemperatur Tg im Bereich ≥ - 30 und ≤ 90 °C aufweisen und die Emulsionspolymerisation in Anwesenheit der mit der Metallverbindung M und der Base B umgesetzen Copolymerisate A stattfindet, wobei in der Regel auf Dispergierhilfsmittel, wie Emulgatoren und/oder Schutzkolloiden, verzichtet werden kann. Dabei ist es selbstverständlich, dass zur Herstellung der Dispersionspolymerisate P im Rahmen der vorliegenden Schrift auch die dem Fachmann geläufigen Saat-, Stufen- und Gradientenfahrweisen mit umfasst sein sollen. Werden Stufenpolymerisate hergestellt, so weist erfindungsgemäß wenigstens das Polymerisat einer Stufe eine Glasübergangstemperatur Tg im Bereich ≥ - 30 und ≤ 90 °C auf.

Als Monomere P kommen insbesondere in einfacher Weise radikalisch polymerisierbare Monomere in Betracht, wie beispielsweise Ethylen, vinylaromatische Monomere, wie Styrol, α-Methylstyrol, o-Chlorstyrol oder Vinyltoluole, Vinylhalogenide, wie Vinylchlorid oder Vinylidenchlorid, Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl-, pentyl-, -hexyl-, -heptyl-, -octyl-, -nonyl-, -decyl- und -2-ethylhexylester, Fumar- und Maleinsäuredimethylester oder -di-n-butylester, Nitrile α,β-monoethylenisch ungesättigter Carbonsäuren, wie Acrylnitril, Methacrylnitril, Fumarsäuredinitril, Maleinsäuredinitril sowie C4-8-konjugierte Diene, wie 1,3-Butadien und Isopren. Die genannten Monomeren P bilden in der Regel die Hauptmonomeren, die, bezogen auf die zur Herstellung des Dispersionspolymerisats P eingesetzte Menge aller ethylenisch ungesättigter Verbindungen (Gesamtmonomerenmenge P), einen Anteil ≥ 50 Gew.-%, bevorzugt ≥ 80 Gew.-% und insbesondere bevorzugt ≥ 90 Gew.-% auf sich vereinen. In aller Regel weisen diese Monomeren P in Wasser bei Normalbedingungen [20 °C, 1 atm (= 1,013 bar absolut)] lediglich eine mäßige bis geringe Löslichkeit auf.

Monomere P, die unter den vorgenannten Bedingungen eine erhöhte Wasserlöslichkeit aufweisen, sind solche, die entweder wenigstens eine Säuregruppe und/oder deren entsprechendes Anion bzw. wenigstens eine Amino-, Amido-, Ureido- oder N-heterocyclische Gruppe und/oder deren am Stickstoff protonierten oder alkylierten Ammoniumderivate enthalten. Beispielhaft genannt seien α,β-monoethylenisch ungesättigte Mono- und Dicarbonsäuren und deren Amide, wie z.B. Acrylsäure, Methacrylsäure, Maleinsäure, Fumarsäure, Itaconsäure, Acrylamid und Methacrylamid, ferner Vinylsulfonsäure, 2-Acrylamido-2-methylpropansulfonsäure, Styrolsulfonsäure und deren wasserlösliche Salze sowie N-Vinylpyrrolidon, 2-Vinylpyridin, 4-Vinylpyridin, 2-Vinylimidazol, 2-(N,N-Dimethylamino)ethylacrylat, 2-(N,N-Dimethylamino)ethylmethacrylat, 2-(N,N-Diethylamino)ethylacrylat, 2-(N,N-Diethylamino)ethylmethacrylat, 2-(N-tert.-Butylamino)ethylmethacrylat, N-(3-N',N'-Dimethylaminopropyl)methacrylamid und 2-(1-Imidazolin-2-onyl)ethylmethacrylat. Im Normalfall sind die vorgenannten Monomeren P lediglich als modifizierende Monomere in Mengen ≤ 10 Gew.-% und bevorzugt ≤ 5 Gew.-%, bezogen auf die Gesamtmonomerenmenge P, enthalten.

Monomere P, die üblicherweise die innere Festigkeit der Verfilmungen der Polymermatrix erhöhen, weisen

normalerweise wenigstens eine Epoxy-, Hydroxy-, N-Methylol- oder Carbonylgruppe, oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. In diesem Zusammenhang von besonderer Bedeutung sind auch die Methacrylsäure- und Acrylsäure-C1-C8-Hydroxyalkylester wie n-Hydroxyethyl-, n-Hydroxypropyl- oder n-Hydroxybutylacrylat und -methacrylat sowie Verbindungen, wie Diacetonacrylamid und Acetylacetoxyethylacrylat bzw. -methacrylat. Häufig werden die vorgenannten Monomeren P in Mengen ≤ 5 Gew.-%, bevorzugt jedoch in Mengen ≤ 3 Gew.-%, jeweils bezogen auf die Gesamtmonomerenmenge P, eingesetzt.

In einer erfindungsgemäßen Ausführungsform werden zur Herstellung des Dispersionspolymerisates P

| | |
|---|---|
| ≥ 50 und ≤ 99,9 Gew.-% | Ester der Acryl- und/oder Methacrylsäure mit 1 bis 12 C-Atome aufweisenden Alkanolen und/oder Styrol, |

oder

≥ 40 und ≤ 99,9 Gew.-% Styrol und/oder Butadien,
oder

≥ 50 und ≤ 99,9 Gew.-% Vinylchlorid und/oder Vinylidenchlorid,
oder

≥ 40 und ≤ 99,9 Gew.-% Vinylacetat, Vinylpropionat und/oder Ethylen

eingesetzt.

Häufig werden erfindungsgemäß zur Herstellung der Dispersionspolymerisate P Monomermischungen umfassend

| | |
|---|---|
| ≥ 0,1 und ≤ 5 Gew.-% | wenigstens eine 3 bis 6 C-Atome aufweisende α,β-monoethylenisch ungesättigte Mono- und/oder Dicarbonsäure und/oder deren Amid, und |
| ≥ 50 und ≤ 99,9 Gew.-% | wenigstens ein Esters der Acryl- und/oder Methacrylsäure mit 1 bis 12 C-Atome aufweisenden Alkanolen und/oder Styrol, |

oder

| | |
|---|---|
| ≥ 0,1 und ≤ 5 Gew.-% | wenigstens eine 3 bis 6 C-Atome aufweisende α,β-monoethylenisch ungesättigte Mono- und/oder Dicarbonsäure und/oder deren Amid, und |
| ≥ 40 und ≤ 99,9 Gew.-% | Styrol und/oder Butadien, |

oder

| | |
|---|---|
| ≥ 0,1 und ≤ 5 Gew.-% | wenigstens eine 3 bis 6 C-Atome aufweisende α,β-monoethylenisch ungesättigte Mono- und/oder Dicarbonsäure und/oder deren Amid, und |
| ≥ 50 und ≤ 99,9 Gew.-% | Vinylchlorid und/oder Vinylidenchlorid, |

oder

| | |
|---|---|
| ≥ 0,1 und ≤ 5 Gew.-% | wenigstens eine 3 bis 6 C-Atome aufweisende α,β-monoethylenisch ungesättigte Mono- und/oder Dicarbonsäure und/oder deren Amid, und |
| ≥ 40 und ≤ 99,9 Gew.-% | Vinylacetat, Vinylpropionat und/oder Ethylen |

eingesetzt.

Erfindungsgemäß vorteilhaft werden als Monomere P jedoch keinerlei 3 bis 6 C-Atome aufweisende α,β-monoethylenisch ungesättigte Mono- und/oder Dicarbonsäure und/oder deren Amid eingesetzt. In einer bevorzugten Ausführungsform werden als Monomeren P ausschließlich Mischungen aus wenigstens einem Ester der Acryl- und/oder Methacrylsäure mit 1 bis 12 C-Atome aufweisenden Alkanolen und Styrol eingesetzt.

Die erfindungsgemäßen Monomeren P können dem wässrigen Medium einzeln oder im Gemisch kontinuierlich oder diskontinuierlich in Substanz oder in Form einer wässrigen Monomeremulsion unter Polymerisationsbedingungen zudosiert werden. Mit Vorteil werden die Monomeren P dem wässrigen Polymerisationsmedium in Substanz als Monomerengemisch kontinuierlich zugegeben.

Die radikalisch initiierte wässrige Emulsionspolymerisation zur Herstellung der Dispersionspolymerisate P wird in der Regel in Gegenwart von 0,1 bis 5 Gew.-%, vorzugsweise 0,1 bis 4 Gew.-% und insbesondere 0,1 bis 3 Gew.-%, jeweils bezogen auf die Gesamtmonomerenmenge P, eines radikalischen Polymerisationsinitiators (Radikalinitiator) durchgeführt. Als Radikalinitiatoren kommen alle diejenigen in Betracht, die in der Lage sind, eine radikalische wässrige Emulsionspolymerisation auszulösen. Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, -Kalium- oder Ammoniumsalze oder organische Peroxide, wie Alkylhydroperoxide, beispielsweise tert.-Butyl-, p-Menthyl- oder Cumylhydroperoxid, sowie Dialkyl- oder Diarylperoxide, wie Di-tert.-Butyl- oder Di-Cumylperoxid eingesetzt werden. Als Azoverbindung finden im Wesentlichen 2,2'-Azobis(isobutyronitril), 2,2'-Azobis(2,4-dimethylvaleronitril) und 2,2'-Azobis(amidinopropyl)dihydrochlorid (AIBA, entspricht V-50 von Wako Chemicals) Verwendung. Selbstverständlich können auch sogenannte Redoxinitiatorensysteme als Radikalinitiatoren eingesetzt werden. Als Oxidationsmittel für Redoxinitiatorsysteme kommen im Wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden.

Optional können bei der Herstellung der Dispersionspolymerisate P durch radikalisch initiierten wässrigen Emulsionspolymerisation zusätzlich noch Dispergierhilfsmittel mitverwendet werden, die üblicherweise sowohl die Monomerentröpfchen als auch Polymerisatteilchen in der wässrigen Phase dispers verteilt halten und so die Stabilität der erzeugten wässrigen Dispersionen der Dispersionspolymerisate gewährleisten. Als solche kommen sowohl die zur Durchführung von radikalischen wässrigen Emulsionspolymerisationen üblicherweise eingesetzten Schutzkolloide als auch Emulgatoren in Betracht.

Prinzipiell geeignete Schutzkolloide sind beispielsweise Polyvinylalkohole, Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Seiten 411 bis 420, Georg-Thieme-Verlag, Stuttgart, 1961. Selbstverständlich können auch Gemische aus Emulgatoren und/oder Schutzkolloiden verwendet werden. Vorzugsweise werden als Dispergierhilfsmittel ausschließlich Emulgatoren eingesetzt, deren relative Molekulargewichte im Unterschied zu den Schutzkolloiden üblicherweise unter 1000 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im Allgemeinen sind anionische Emulgatoren untereinander und mit nichtionischen Emulgatoren verträglich. Desgleichen gilt auch für kationische Emulgatoren, während anionische und kationische Emulgatoren meistens nicht miteinander verträglich sind. Gebräuchliche Emulgatoren sind z.B. ethoxilierte Mono-, Di- und Tri-Alkylphenole (EO-Grad: 3 bis 50, Alkylrest: $C_4$ bis $C_{12}$), ethoxilierte Fettalkohole (EO-Grad: 3 bis 50; Alkylrest: $C_8$ bis $C_{36}$) sowie Alkalimetall- und Ammoniumsalze von Alkylsulfaten (Alkylrest: $C_8$ bis $C_{12}$), von Schwefelsäurehalbestern ethoxylierter Alkanole (EO-Grad: 4 bis 30, Alkylrest: $C_{12}$ bis $C_{18}$) und ethoxilierter Alkylphenole (EO-Grad: 3 bis 50, Alkylrest: $C_4$ bis $C_{12}$), von Alkylsulfonsäuren (Alkylrest: $C_{12}$ bis $C_{18}$) und von Alkylarylsulfonsäuren (Alkylrest:

$C_9$ bis $C_{18}$). Weitere geeignete Emulgatoren finden sich in Houben-Weyl, Methoden der organischen Chemie, Band XIV/1, Makromolekulare Stoffe, Seiten 192 bis 208, Georg-Thieme-Verlag, Stuttgart, 1961.

Als grenzflächenaktive Substanzen haben sich ferner Verbindungen der allgemeinen Formel I

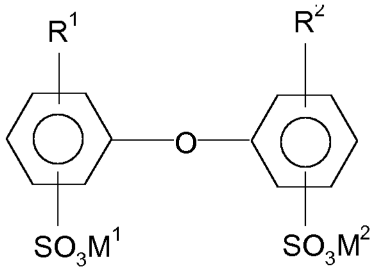

(I) ,

worin $R^1$ und $R^2$ H-Atome oder $C_4$- bis $C_{24}$-Alkyl bedeuten und nicht gleichzeitig H-Atome sind, und $M^1$ und $M^2$ Alkalimetallionen und/oder Ammoniumionen sein können, als geeignet erwiesen. In der allgemeinen Formel (I) bedeuten $R^1$ und $R^2$ bevorzugt lineare oder verzweigte Alkylreste mit 6 bis 18 C-Atomen, insbesondere mit 6, 12 und 16 C-Atomen oder Wasserstoff, wobei $R^1$ und $R^2$ nicht beide gleichzeitig H-Atome sind. $M^1$ und $M^2$ sind bevorzugt Natrium, Kalium oder Ammonium, wobei Natrium besonders bevorzugt ist. Besonders vorteilhaft sind Verbindungen (I), in denen $M^1$ und $M^2$ Natrium, $R^1$ ein verzweigter Alkylrest mit 12 C-Atomen und $R^2$ ein H-Atom oder $R^1$ ist. Häufig werden technische Gemische verwendet, die einen Anteil von 50 bis 90 Gew.-% des monoalkylierten Produktes aufweisen, wie beispielsweise Dowfax® 2A1 (Marke der Dow Chemical Company). Die Verbindungen (I) sind allgemein bekannt, z.B. aus US-A 4269749, und im Handel erhältlich.

Optional vorteilhaft werden bei der Herstellung der Dispersionspolymerisate P durch radikalisch initiierten wässrigen Emulsionspolymerisation nichtionische und/oder anionische Dispergierhilfsmittel verwendet. Es können jedoch auch kationische Dispergierhilfsmittel eingesetzt werden.

In der Regel beträgt die Menge an optional eingesetztem Dispergierhilfsmittel 0,1 bis 5 Gew.-%, bevorzugt 1 bis 3 Gew.-%, jeweils bezogen auf die Gesamtmonomerenmenge P. Häufig ist es günstig, wenn eine Teil- oder die Gesamtmenge des Dispergierhilfsmittels dem wässrigen Reaktionsmedium vor der Initiierung der radikalischen Polymerisation zugeführt wird. Darüber hinaus kann eine Teil- oder die Gesamtmenge des Dispergierhilfsmittels dem wässrigen Reaktionsmedium vorteilhaft auch gemeinsam mit den Monomeren, insbesondere in Form einer wässrigen Monomerenemulsion während der Polymerisation zugeführt werden. Mit besonderem Vorteil werden jedoch im erfindungsgemäßen Verfahren keine der optionalen Dispergierhilfsmittel eingesetzt.

Radikalkettenübertragende Verbindungen können eingesetzt werden, um das Molekulargewicht der durch eine radikalisch initiierte wässrige Emulsionspolymerisation zugänglichen Dispersionspolymerisate P zu reduzieren bzw. zu kontrollieren. Dabei können im Wesentlichen aliphatische und/oder araliphatische Halogenverbindungen, wie beispielsweise n-Butylchlorid, n-Butylbromid, n-Butyljodid, Methylenchlorid, Ethylendichlorid, Chloroform, Bromoform, Bromtrichlormethan, Dibromdichlormethan, Tetrachlorkohlenstoff, Tetrabromkohlenstoff, Benzylchlorid, Benzylbromid, organische Thioverbindungen, wie primäre, sekundäre oder tertiäre aliphatische Thiole, wie beispielsweise Ethanthiol, n-Propanthiol, 2-Propanthiol, n-Butanthiol, 2-Butanthiol, 2-Methyl-2-propanthiol, n-Pentanthiol, 2-Pentanthiol, 3-Pentanthiol, 2-Methyl-2-butanthiol, 3-Methyl-2-butanthiol, n-Hexanthiol, 2-Hexanthiol, 3-Hexanthiol, 2-Methyl-2-pentanthiol, 3-Methyl-2-pentanthiol, 4-Methyl-2-pentanthiol, 2-Methyl-3-pentanthiol, 3-Methyl-3-pentanthiol, 2-Ethylbutanthiol, 2-Ethyl-2-butanthiol, n-Heptanthiol und seine isomeren Verbindungen, n-Octanthiol und seine isomeren Verbindungen, n-Nonanthiol und seine isomeren Verbindungen, n-Decanthiol und seine isomeren Verbindungen, n-Undecanthiol und seine isomeren Verbindungen, n-Dodecanthiol und seine isomeren Verbindungen, n-Tridecanthiol und seine isomeren Verbindungen, substituierte Thiole, wie beispielsweise 2-Hydroxyethanthiol, aromatische Thiole, wie Benzolthiol, ortho-, meta-, oder para-Methylbenzolthiol, sowie alle weiteren im Polymerhandbook 3rd edtition, 1989, J. Brandrup und E.H. Immergut, John Wiley & Sons, Abschnitt II, Seiten 133 bis 141, beschriebenen Schwefelverbindungen, aber auch aliphatische und/oder aromatische Aldehyde, wie Acetaldeyhd, Propionaldehyd und/oder Benzaldehyd, ungesättigte Fettsäuren, wie Ölsäure, Diene mit nicht konjugierten Doppelbindungen, wie Divinylmethan oder Vinylcyclohexan oder Kohlenwasserstoffe mit leicht abstrahierbaren Wasserstoffatomen, wie beispielsweise Toluol, zum Einsatz kommen. Es ist optional aber auch möglich, Gemische sich nicht störender vorgenannter radikalkettenübertragender Verbindungen einzusetzen.

Die bei der Herstellung der Dispersionspolymerisate P durch radikalisch initiierten wässrigen Emulsionspolymerisation optional eingesetzte Gesamtmenge der radikalkettenübertragenden Verbindungen, beträgt in der Regel < 5 Gew.-%, oft < 3 Gew.-% und häufig < 1 Gew.-%, jeweils bezogen auf die Gesamtmonomerenmenge P.

Neben der saatfreien Herstellungsweise kann zur Einstellung der Polymerisatteilchengröße die Emulsionspolymerisation zur Herstellung der Dispersionspolymerisate P nach dem Saatlatex-Verfahren oder in Gegenwart eines

in situ hergestellten Saatlatex erfolgen. Verfahren hierzu sind dem Fachmann bekannt und können dem Stand der Technik entnommen werden (siehe beispielsweise EP-B 40 419, EP-A 567 812, EP-A 614 922 sowie 'Encyclopedia of Polymer Science and Technology', Vol. 5, Seite 847, John Wiley & Sons Inc., New York, 1966). So empfiehlt der Stand der Technik, beim semikontinuierlichen Zulaufverfahren eine definierte feinteilige Saat-Polymerisatdispersion im Polymerisationsgefäß vorzulegen und dann die Monomeren in Gegenwart des Saatlatices zu polymerisieren. Hierbei wirken die Saat-Polymerisatteilchen als 'Polymerisationskeime' und entkoppeln die Polymersatteilchenbildung und das Polymerisatteilchenwachstum. Während der Emulsionspolymerisation kann weitere Saatlatex direkt in den Polymerisationsreaktor zugegeben werden. Hierdurch werden breite Größenverteilungen der Polymerisatteilchen erreicht, die insbesondere bei Polymerisatdispersionen mit hohem Feststoffgehalt oftmals erwünscht sind (vgl. hierzu beispielsweise DE-A 4213965). Anstelle der Zugabe eines definierten Saatlatices kann dieser auch in situ erzeugt werden. Hierzu wird beispielsweise eine Teilmenge der zur Polymerisation eingesetzten Monomeren und des Radikalinitiators zusammen mit einer Teil- oder der Gesamtmenge des Emulgators vorgelegt und auf Reaktionstemperatur erwärmt, wobei eine relativ feinteilige Polymersaat entsteht. Anschließend wird im gleichen Polymerisationsgefäß die eigentliche Polymerisation nach dem Zulaufverfahren durchgeführt (siehe auch DE-A 4213965). Erfindungsgemäß vorteilhaft wird jedoch keinerlei Saatlatex eingesetzt.

Vorteilhaft erfolgt Herstellung der Dispersionspolymerisate P durch radikalisch initiierten wässrigen Emulsionspolymerisation bei einer Reaktionstemperatur im Bereich von 0 bis 170 °C, wobei jedoch Temperaturen von 70 bis 120 °C und insbesondere 80 bis 100 °C besonders bevorzugt sind. Die radikalische wässrige Emulsionspolymerisation kann bei einem Druck kleiner, gleich oder größer 1 atm (absolut) durchgeführt werden. Vorzugsweise werden leichtflüchtige Monomere wie Ethylen, Butadien oder Vinylchlorid unter erhöhtem Druck polymerisiert. Dabei kann der Druck 1,2, 1,5, 2, 5, 10, 15 bar (Überdruck) oder noch höhere Werte einnehmen. Werden Emulsionspolymerisationen im Unterdruck durchgeführt, werden Drücke von 950 mbar, häufig von 900 mbar und oft 850 mbar (absolut) eingestellt. Vorteilhaft wird die radikalische wässrige Emulsionspolymerisation bei 1 atm (= Atmosphärendruck = 1,013 bar absolut) unter Inertgasatmosphäre, wie beispielsweise unter Stickstoff oder Argon durchgeführt.

Bei der radikalisch initiierten wässrigen Emulsionspolymerisation kann das wässrige Reaktionsmedium prinzipiell auch in untergeordneten Mengen (< 5 Gew.-%) wasserlösliche organische Lösungsmittel, wie beispielsweise Methanol, Ethanol, Isopropanol, Butanole, Pentanole, aber auch Aceton etc. umfassen. Erfindungsgemäß bevorzugt erfolgt die radikalisch initiierte wässrige Emulsionspolymerisation jedoch in Abwesenheit solcher Lösungsmittel durchgeführt.

Erfindungsgemäß wird die Art und Menge des wenigstens einen Monomeren P so gewählt, dass das erhaltene Dispersionspolymerisat P eine Glasübergangtstemperatur Tg gemessen nach DIN EN ISO 11357-2 (2013-09) im Bereich ≥ - 30 und ≤ 90 °C aufweist. Soll das Dispersionspolymerisat P als Bindemittel in pigmenthaltigen Beschichtungsformulierungen eingesetzt werden, so wird die Art und Menge der jeweils eingesetzten Monomeren P so gewählt, dass das Dispersionspolymerisat P eine Glasübergangstemperatur Tg im Bereich ≥ - 20 und ≤ 80 °C und besonders vorteilhaft im Bereich ≥ 10 und ≤ 70 °C aufweist. Soll dagegen das Dispersionspolymerisat P als Bindemittel in pigmentfreien Klarlacken eingesetzt werden, so wird die Art und Menge der jeweils eingesetzten Monomeren P so gewählt, dass das Dispersionspolymerisat P eine Glasübergangstemperatur Tg im Bereich ≥ - 10 und ≤ 80 °C und besonders vorteilhaft im Bereich ≥ - 5 und ≤ 65 °C aufweist.

Unter Glasübergangstemperatur Tg wird im Rahmen dieser Schrift die midpoint temperature nach DIN EN ISO 11357-2 (2013-09) verstanden, ermittelt durch Differentialthermoanalyse [siehe auch Ullmann's Encyclopedia of Industrial Chemistry, Seite 169, Verlag Chemie, Weinheim, 1992 und Zosel in Farbe und Lack, 82, Seiten 125 bis 134, 1976].

Von Bedeutung ist ferner, dass nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) die Glasübergangstemperatur von höchstens schwach vernetzten Mischpolymerisaten in guter Näherung nach folgender Gleichung abgeschätzt werden kann

$$1/Tg = x_1/Tg^1 + x_2/Tg^2 + .... x_n/Tg^n,$$

wobei $x_1$, $x_2$, .... $x_n$ die Massenbrüche der Monomeren 1, 2, .... n und $Tg^1$, $Tg^2$, .... $Tg^n$ die Glasübergangstemperaturen der jeweils nur aus einem der Monomeren 1, 2, .... n aufgebauten Homopolymerisaten in Grad Kelvin bedeuten. Die Glasübergangstemperaturen dieser Homopolymerisate der meisten ethylenisch ungesättigten Monomere sind bekannt (bzw. können in einfacher an sich bekannter Weise experimentell ermittelt werden) und beispielsweise in J. Brandrup, E.H. Immergut, Polymer Handbook 1st Ed. J. Wiley, New York, 1966, 2nd Ed. J. Wiley, New York, 1975 und 3rd Ed. J. Wiley, New York, 1989, sowie in Ullmann's Encyclopedia of Industrial Chemistry, Seite 169, Verlag Chemie, Weinheim, 1992, aufgeführt.

Die durch das erfindungsgemäße Verfahren zugänglichen wässrigen Polymerisatdispersionen weisen üblicherweise einen Gesamtpolymerisatfeststoffgehalt (Summe aus den Mengen an Copolymerisat A und Dispersionspolymerisat P) von ≥ 10 und ≤ 70 Gew.-%, häufig ≥ 20 und ≤ 65 Gew.-% und oft ≥ 25 und ≤ 60 Gew.-%, jeweils bezogen auf die wässrige Polymerisatdispersion, auf.

Mit besonderem Vorteil liegen die Dispersionspolymerisate P in Form von Teilchen mit einem mittleren Teilchendurchmesser ≥ 10 und ≤ 1000 nm, vorteilhaft ≥ 20 und ≤ 200 nm und besonders vorteilhaft ≥ 20 bis ≤ 100 nm, bestimmt nach der Methode der quasielastische Lichtstreuung (ISO-Norm 13 321; cumulant z-average), vor.

Erfindungsgemäß von Bedeutung ist, dass das Verhältnis der Gewichtsmengen an Copolymerisat A zu dem zur Herstellung des Dispersionspolymerisates P eingesetzten wenigstens einen Monomeren P (Gesamtmonomerenmenge P) im Bereich ≥ 15 und ≤ 60 zu ≥ 40 und ≤ 85, vorteilhaft im Bereich ≥ 20 und ≤ 50 zu ≥ 50 und ≤ 80 und insbesondere vorteilhaft im Bereich ≥ 25 und ≤ 45 zu ≥ 55 und ≤ 75 liegt.

Selbstverständlich sind in einer bevorzugten Ausführungsform auch die nach dem erfindungsgemäßen Verfahren zugänglichen wässrigen Polymerisatdispersionen sowie durch deren Trockung zugänglichen Polymerisatpulver umfasst. Die Herstellung von Polymerisatpulver durch Trocknung von wässrigen Polymerisatdispersionen ist dem Fachmann geläufig und erfolgt beispielsweise durch Gefriertrocknung oder Sprühtrocknung.

Von Bedeutung ist, dass sich die nach dem erfindungsgemäßen Verfahren hergestellten wässrigen Polymerisatdispersionen durch eine hohe Stabilität und durch eine geringe Koagulatbildung auszeichnen und darüber hinaus eine hohe Transparenz aufweisen.

Von Bedeutung ist ferner, dass sich die nach dem erfindungsgemäßen Verfahren zugänglichen wässrigen Polymerisatdispersionen sowie die daraus durch Trocknung erhältlichen Polymerisatpulver vorteilhaft als Bindemittel bei der Herstellung von Klebstoffen, Dichtmassen, Kunstharzputzen, Papierstreichmassen, Faservliesen, flexiblen Dachbeschichtungen, Druckfarben und Beschichtungsmitteln sowie bei der Sandverfestigung, als Komponente bei der Herstellung von Textil- oder Lederhilfsmitteln und Schlagzähmodifier oder zur Modifizierung von mineralischen Bindemitteln und Kunststoffen verwenden lassen.

Mit Vorteil lassen sich die erfindungsgemäßen wässrigen Polymerisatdispersionen bzw. die erfindungsgemäßen Polymerisatpulver in wässrigen Formulierungen einsetzen, welche als Bindemittel in Beschichtungsformulierungen Verwendung finden. In einer erfindungsgemäßen Ausführungsform enthalten diese wässrigen Formulierungen noch wenigstens ein Pigment, weswegen erfindungsgemäß auch wässrige Formulierungen umfasst sein sollen, welche eine erfindungsgemäße wässrige Polymerisatdispersion oder ein entsprechendes Polymerisatpulver sowie wenigstens ein Pigment enthalten.

Werden die vorgenannten wässrigen Formulierungen umfassend eine erfindungsgemäße wässrige Polymerisatdispersion bzw. deren Polymersatpulver zur Herstellung von wässrigen Beschichtungsformulierungen eingesetzt, so können diese wässrigen Formulierungen neben üblichen dem Fachmann geläufigen Bestandteilen, wie beispielsweise organische Lösungsmittel, Koaleszenzmittel, Dispergierhilfsmittel, Neutralisationsmittel, Entschäumer, Verdicker und Verlaufsmittel sowie bakterizide oder fungizide Hilfsstoffe zusätzlich noch Pigmente und/oder Füllstoffe enthalten.

Als Pigmente können prinzipiell alle dem Fachmann geläufigen Weiß- bzw. Buntpigmente eingesetzt werden. Dabei werden unter Pigmenten gemäß CD Römpp Chemie Lexikon - Version 1.0, Stuttgart/New York: Georg Thieme Verlag 1995 unter Verweis auf DIN 55943, partikelförmige im Anwendungsmedium praktisch unlösliche, anorganische oder organische, bunte oder unbunte Farbmittel verstanden.

Dabei können als Pigmente vorteilhaft alle dem Fachmann geläufigen organischen und/oder anorganischen Weiß- bzw. Buntpigmente mit einer Teilchengröße ≤ 15 μm, gemessen nach ISO 1524 mit einem Hegmann-Grindometer, eingesetzt werden.

Als wichtigstes Weißpigment ist aufgrund seines hohen Brechungsindex (Rutil: 2,70 und Anatas: 2,55) und seines guten Deckvermögens Titandioxid in seinen verschiedenen Modifikationen zu nennen. Aber auch Zinkoxid und Zinksulfid werden als Weißpigmente eingesetzt. Dabei können diese Weißpigmente in oberflächenbeschichteter (d.h. gecoateter) bzw. unbeschichteter (d.h. nicht gecoateter) Form eingesetzt werden. Daneben werden aber auch organische Weißpigmente, wie beispielsweise nichtverfilmende styrol- und carboxylgruppenreiche hohle Polymerisatteilchen mit einer Teilchengröße von ca. 300 bis 400 nm (sogenannte Opakteilchen) verwendet.

Neben Weißpigmenten können zur Farbgestaltung dem Fachmann geläufige unterschiedlichste Buntpigmente, beispielsweise die etwas preiswerteren anorganischen Eisen-, Cadmium-, Chrom- und Bleioxide bzw. -sulfide, Bleimolybdat, Kobaltblau oder Ruß sowie die etwas teureren organischen Pigmente, beispielsweise Phthalocyanine, Azopigmente, Chinacridone, Perylene oder Carbazole eingesetzt werden.

Selbstverständlich können die wässrigen Formulierungen zusätzlich zu den Pigmenten noch sogenannte, dem Fachmann geläufige Füllstoffe enthalten. Als Füllstoffe werden im Wesentlichen pulverförmige anorganische Materialien mit einer Teilchengröße ≤ 20 μm (nach Hegmann) mit im Vergleich zu den Pigmenten geringerem Brechungsindex verstanden (weiße Füllstoffe weisen nach DIN 55943 und DIN 55945 Brechungsindexwerte < 1,7 auf). Die pulverförmigen Füllstoffe sind dabei häufig natürlich vorkommende Mineralien, wie beispielsweise Calcit, Kreide, Dolomit, Kaolin, Talk, Glimmer, Diatomeenerde, Baryt, Quarz oder Talk/Chlorit-Verwachsungen aber auch synthetisch hergestellte anorganische Verbindungen, wie beispielsweise präzipitiertes Kalziumcarbonat, kalziniertes Kaolin oder Bariumsulfat sowie pyrogene Kieselsäure. Bevorzugt wird als Füllstoff Kalziumcarbonat in Form des kristallinen Calcits oder der amorphen

Kreide eingesetzt.

In einer Ausführungsform enthalten die wässrigen Formulierungen noch mindestens ein organisches Lösungsmittel, welches vorteilhaft als Filmbildehilfsmittel wirkt. Dafür kommen beispielsweise aromatische Kohlenwasserstoffe, wie Solventnaphtha, Benzol, Toluol, Xylol, oder Gemische von aromatischen Kohlenwasserstoffen, wie sie beispielsweise als Solvesso® 100, 150 oder 200 vertrieben werden, Chlorbenzol, Ester wie Ethylacetat, Butylacetat, Methylglykolacetat, Ethylglykolacetat, Methoxypropylacetat, 2,2,4-Trimethyl-1,3-pentandiol-monoisobutyrat (Texanol® der Firma Eastman), Dipropylenglykolmonomethyletheracetat, Propylenglykolmonoethyletheracetat, Propylenglykolmonomethyletheracetat, Ether wie Butylglykol, Tetrahydrofuran, Dioxan, Ethylglykolether, Diethylenglykolmonoethylether, Diethylenglykolmonomethylether, Diethylenglykol mono-n-butylether, Diethylenglykolmono-n-hexylether, Diethylenglykoldiethylether, Diethylenglykoldimethylether, Diethylenglykoldi-n-butylether, Diethylenglykoldi-n-hexylether, Ethylenglykol-di-2-ethylhexylether, Ethylenglykoldi-n-butylether, Ethylenglykoldi-n-hexylether, Ethylenglykol-di-n-propylether, Dipropylenglykoldimethylether, Dipropylenglykolmonomethylether, Dipropylenglykolmono-n-butylether, Dipropylenglykolmono-n-propylether, Dipropylenglykolmono-tert-butylether, Dipropylenglykol-di-tert-butylether, Propylenglykolmonoethylether, Propylenglykolmonomethylether, Propylenglykolmono-n-propylether, Propylenglykolmonophenylether, Propylenglykolmono-tert-butylether, Propylenglykoldiphenylether, Propylenglykolmono-n-butylether, Tripropylenglykolmonomethylether und Poly(allylglycidylether), Ketone wie Aceton, Methylethylketon, halogenhaltige organische Lösemittel wie Methylenchlorid oder Trichlormonofluorethan oder andere organische Lösemittel, wie beispielsweise Benzylalkohol, Dibutylphthalat, Propylenglykol, Tris(butoxyethyl)phosphat in Betracht.

Filmbildehilfsmittel, werden insbesondere eingesetzt, um die Mindestfilmbildetemperatur (MFT) der Dispersionspolymerisate herabzusetzen und so zu einer guten Filmbildung beizutragen. Dabei wird im Rahmen dieser Schrift unter der MFT die nach der DIN ISO 2115 vom April 2001 experimentell ermittelte Temperatur verstanden, unterhalb derer die wässrige Polymerdispersion keinen geschlossenen Polymerisatfilm mehr bildet.

Enthalten die wässrigen Formulierungen neben der erfindungsgemäßen wässrigen Polymerisatdispersion bzw. dessen Polymerisatpulver zusätzlich noch wenigstens ein Pigment oder Füllstoff, so weisen diese vorteilhaft eine Pigmentvolumenkonzentration $\geq 1$ und $\leq 60$ %, vorteilhaft $\geq 5$ und $\leq 50$ % und insbesondere vorteilhaft $\geq 10$ und $\leq 40$ % auf. Dabei wird unter der Pigmentvolumenkonzentration (PVK) das Volumen der Pigmente und der Füllstoffe multipliziert mit 100, dividiert durch das Volumen des Bindemittelpolymers plus das Volumen der Pigmente und der Füllstoffe verstanden.

$$\%\ PVK = \frac{\text{Volumen der Pigmente und Füllstoffe}}{\text{Volumen des Bindemittelpolymers + Volumen der Pigmente und Füllstoffe}}$$

Enthalten die wässrigen Formulierungen jedoch neben der erfindungsgemäßen wässrigen Polymerisatdispersion bzw. dessen Polymerisatpulver keine Pigmente, Füllstoffe oder andere Feststoffe, so sind diese Formulierung aufgrund der kleinen Teilchengröße der Dispersionspolymerisate P in der Regel klar durchscheinend, weswegen sie eine hohe Naßtransparenz aufweisen und daher vorteilhaft insbesondere für Klarlacke geeignet sind.

Mit Vorteil werden die wässrigen Formulierungen, insbesondere Beschichtungsformulierungen, welche keine Filmbildehilfsmittel enthalten, zuerst auf die Oberfläche eines Substrates aufgebracht und danach bei einer Temperatur T, welche gleich oder größer ist als die Mindestfilmbildetemperatur (MFT) [$T \geq MFT$] der erfindungsgemäßen wässrigen Polymerdispersion oder ihrer wässrigen Formulierung, getrocknet wird. Mit Vorteil ist die Trocknungstemperatur $T \geq (MFT + 5)$ °C, mit besonderem Vorteil $T \geq (MFT + 10)$ °C und insbesondere $T \geq (MFT + 20)$ °C. Erfindungsgemäß von Bedeutung ist, dass die Menge an wässriger Formulierung so gewählt wird, dass die auf das Substratoberfläche aufgebrachte Beschichtung nach der Trocknung eine Schichtdicke $\leq 2$ mm, vorteilhaft $\geq 0{,}01$ und $\leq 1{,}5$ mm und insbesondere vorteilhaft $\geq 0{,}02$ und $\leq 0{,}5$ mm aufweist. Selbstverständlich ist es erfindungsgemäß möglich, dass auf ein Substrat nacheinander zwei oder mehrere gleiche oder unterschiedliche Beschichtungsschichten aufgebracht werden können.

Erfindungsgemäß können alle natürlichen oder synthetischen, organischen oder anorganischen Substrate mit der wässrigen Formulierung beschichtet werden. In einer bevorzugten Ausführungsform eignen sich die erfindungsgemäßen wässrigen Formulierungen jedoch zur Beschichtung von Substraten, welche eine hydrophile Oberfläche aufweisen, wie beispielsweise Metall, Glas, Porzellan, Papier, Pappe, Kunststoffe, Beton oder Holz.

Im Rahmen der vorliegenden Schrift weist ein Substrat dann eine hydrophile Oberfläche auf, wenn bei einer Temperatur von 20 °C und Atmosphärendruck (1,013 bar absolut) der Kontaktwinkel eines auf eine waagrechte ebene Oberfläche eines Substrates aufgebrachter Tropfen entionisierten Wassers, unmittelbar nach dessen Aufbringen, mit der Oberfläche des Substrates einen Kontaktwinkel < 90° ausbildet [Grenzflächenspannung des Substrates zur Umgebung ist größer als die Grenzflächenspannung des Wassers zur Umgebung].

Von Bedeutung ist ferner, dass sich die erfindungsgemäßen wässrigen Formulierungen insbesondere zur Herstellung von Beschichtungen mit hoher Lösungsmittelbeständigkeit und geringer Anschmutzneigung bzw. hoher Resistenz gegen Fleckenbildung eignen.

Die Erfindung soll anhand nachfolgender nicht einschränkender Beispiele erläutert werden.

Beispiele

Zur Herstellung der wässrigen Beschichtungsformulierung wurde ein Copolymerisat A eingesetzt, zu dessen Herstellung gemäß der in der US-A 4529787 offenbarten Verfahrensweise eine Mischung der folgenden Monomeren A1 und A2 eingesetzt wurden: 10,8 Gew.-% Acrylsäure, 27,8 Gew.-% Styrol, 47,3 Gew.-% Methylmethacrylat und 14,1 Gew.-% n-Butylacrylat. Das in Form von Pulverflocken erhaltene Copolymerisat A wies ein gewichtsmittleres Molekulargewicht von 9150 g/mol, eine Glasübergangstemperatur von 81 °C sowie eine Säurezahl von 77 mg KOH/g Polymer auf.

Dabei erfolgte die Bestimmung des gewichtsmittleren Molekulargewichts mittels Gelpermeationschromatographie. Als Eluent wurde eine Mischung aus Tetrahydrofuran und 0,1 Gew.-% Trifluaressigsäure verwendet. Zur Trennung wurde die Säule "PLgel MIXED-B" der Fa. Agilent verwendet. Die Kalibrierung erfolgte mit eng verteilten Polystyrol-Standards der Fa. Polymer Laboratories mit Molekulargewichten von M = 580 bis M 6.870.000 g/mol, sowie Hexylbenzol (M = 162 g/mol). Die Werte außerhalb dieses Elutionsbereiches wurden extrapoliert. Zur Detektion wurde der Detektor "DRI Agilent 1100 UV Agilent 1100 VWD" der Firma Agilent bei 254 nm verwendet.

Die Bestimmung der Glasübergangstemperatur Tg erfolgte im Rahmen dieser Schrift generell nach DIN EN ISO 11357-2 (2013-09) über Differential Scanning Calorimetry (DSC) mit einer Aufheizrate von 20 K/min mittels eines DSC Q2000-Gerätes der Firma TA Instruments. Dabei wurden die Mittelpunkttemperaturen zur Bestimmung herangezogen.

Die Säurezahl des Copolymerisats A wurde unter Berücksichtigung der entsprechenden Molmasssen der Monomere und der theoretischen Zusammensetzung des Polymers berechnet.

Herstellung der Copolymerisat A-Lösungen

Erfindungsgemäße Copolymerisat A-Lösung (Copolymerisat A-Lösung)

In einem Reaktionsgefäß wurden bei Raumtemperatur 680,2 Gew.-Teile entionisiertes Wasser sowie 0,62 Gew.-Teile pulverförmiges Kalziumhydroxid sowie 300,0 Gew.-Teile pulverförmiges Copolymerisat A vorgelegt und unter Rühren innerhalb von 10 Minuten 23,44 Gew.-Teile einer 25 gew.-%igen wässrigen Ammoniaklösung zudosiert. Das erhaltene Reaktionsgemisch wurde anschließend für 30 Minuten bei Raumtemperatur gerührt, danach unter Rühren auf 80 °C aufgeheizt und für 2 Stunden bei dieser Temperatur gerührt, wobei sich das Copolymerisat A vollständig aufgelöste. Daran anschließend wurde die lediglich eine leichte Trübung aufweisende Copolymerisat A-Lösung auf Raumtemperatur abgekühlt. Die erhaltene Copolymerisat A-Lösung wies einen Feststoffgehalt von 29,7 Gew.-% und einen pH-Wert von 7,9 auf.

Die Feststoffgehalte wurden im Rahmen dieser Schrift generell bestimmt, indem eine definierte Menge der wässrigen Polymerdispersion (ca. 0,8 g) mit Hilfe des Feuchtebestimmers HR73 der Firma Mettler Toledo bei einer Temperatur von 130 °C bis zur Gewichtskonstanz getrocknet wurde. Es werden jeweils zwei Messungen durchgeführt und der Mittelwert dieser beiden Messungen angegeben.

Die pH-Werte werden im Rahmen dieser Schrift generell mittels einer geeichten pH Elektrode InPro® 325X der Firma Mettler-Toledo GmbH bei Raumtemperatur bestimmt.

Copolymerisat A-Vergleichslösung (Copolymerisat VA-Lösung)

Die Herstellung der Copolymerisat VA-Lösung erfolgte völlig analog zur Herstellung der Copolymerisat A-Lösung mit dem Unterschied, dass kein Kalziumhydroxid eingesetzt wurde. Die erhaltene Copolymerisat VA-Lösung wies einen Feststoffgehalt von 29,9 Gew.-% und einen pH-Wert von 7,7 auf.

Herstellung der wässrigen Polymerisatdispersionen

Erfindungsgemäße wässige Polymerisatdispersion P

In einem mit Dosiereinrichtungen und Temperaturregelung ausgerüsteten Polymerisationsgefäß wurden bei Raumtemperatur unter Stickstoffatmosphäre

| | |
|---|---|
| 317,9 g | entionisiertes Wasser |
| 480,5 g | Copolymerisat A-Lösung |

vorgelegt und unter Rühren auf 80°C aufgeheizt. Bei Erreichung dieser Temperatur wurden

| | |
|---|---|
| 30,9 g | einer 7 gew.-%igen wässrigen Lösung von Ammoniumperoxodisulfat |

zugegeben und es wurde 5 Minuten unter Aufrechterhaltung dieser Temperatur gerührt. Danach wurde Zulauf 1 innerhalb von 120 Minuten mit gleichmäßigem Mengenstrom kontinuierlich zudosiert. Nach Ende von Zulauf 1 wurde (die Zulaufleitung mittels) Zulauf 2 zugegeben (gespült), und das erhaltene Reaktionsgemisch für 60 Minuten nachpolymerisiert.

Zulauf 1 (homogene Mischung aus):

| | |
|---|---|
| 216,2 g | Styrol |
| 62,5 g | n-Butylacrylat |
| 57,7 g | 2-Ethylhexylacrylat |

Zulauf 2:

| | |
|---|---|
| 25,00 g | entionisiertes Wasser |

Nach Beendigung der Nachpolymerisationszeit wurde die erhaltene wässrige Polymerisatdispersion auf Raumtemperatur abgekühlt, mit 0,5 g einer 5 gew.-%igen wässrigen Lösung von Acticid® MBS (ein Biozid der Firma Thor GmbH) sowie mit 14,8 g entionisiertem Wasser und 2,9 g einer 25 gew.-%-igen wässrigen Ammoniaklösung versetzt und über ein 125 μm Filter filtriert.

Die erhaltene wässrige Polymerisatdispersion wies einen Feststoffgehalt von 40,2 Gew.-% und einen pH-Wert von 8,3 auf. Der gewichtsmittlere Teilchendurchmesser betrug 53 nm. Die Filtration über das 125 μm Filter lieferte eine Koagulatmenge von 0,01 Gew.-%, bezogen auf den Feststoffgehalt der erhaltenen wässrigen Polymerisatdispersion. Auch im Reaktionsgefäß wurde keine Gelbildung beobachtet.

Die Bestimmung des gewichtsmittleren Teilchendurchmessers erfolgte im Rahmen dieser Schrift generell nach nach ISO 13321 mit einem High Performance Particle Sizer der Fa. Malvern bei 22 °C und einer Wellenlänge von 633 nm.

Wässige Polymerisatvergleichsdispersion VP1

Die Herstellung der Polymerisatvergleichsdispersion VP1 erfolgte völlig analog der Herstellung der erfindungsgemäßen wässrigen Polymerisatdispersion P mit dem Unterschied, dass anstelle der Copolymerisat A-Lösung die gleiche Menge an Copolymerisat VA-Lösung eingesetzt wurde.

Die erhaltene wässrige Polymerisatvergleichsdispersion VP1 wies einen Feststoffgehalt von 40,2 Gew.-% und einen pH-Wert von 8,2 auf. Der gewichtsmittlere Teilchendurchmesser betrug 51 nm. Die Filtration über das 125 μm Filter lieferte eine Koagulatmenge von 0,01 Gew.-%, bezogen auf den Feststoffgehalt der erhaltenen wässrigen Polymerisatdispersion. Auch im Reaktionsgefäß wurde keine Gelbildung beobachtet.

Wässrige Polymerisatvergleichsdispersion VP2

100,0 g einer über ein 45 μm Filter filtrierten Polymerisatvergleichsdispersion VP1 wurden bei Raumtemperatur in einem Glasgefäß unter Rühren mit 0,12 g einer 20 gew.-%igen wässrigen Kalziumhydroxidschlämme innerhalb von 10 Minuten versetzt und anschließend 30 Minuten gerührt. Danach wurde die erhaltene Polymerisatvergleichsdispersion VP2 über ein 45 μm Filter filtriert, wobei 0,6 g Koagulat (entsprechend 1,5 Gew.-%, bezogen auf den Gesamtfeststoffgehalt) erhalten wurden. Darüber hinaus wurden am Rührer sowie auf der Oberfläche des Glasgefäßes die Bildung von Koagulat bzw. Gelteilchen beobachtet.

Herstellung und anwendungstechnische Prüfung der Lackformulierungen

Zur Herstellung der Lackformulierungen wurden die wässrigen Polymerisatdispersion P, sowie die Vergleichsdispersionen VP1 und VP2 unter Rühren und Zugabe von entionisiertem Wasser auf einen Feststoffgehalt von 39,0

Gew.-% eingestellt.

Daran anschließend wurden jeweils 150 g dieser so erhaltenen wässrigen Polymerisat(vergleichs)dispersionen bei Raumtemperatur vorgelegt. Zu den so vorgelegten wässrigen Polymerisat(vergleichs)dispersionen wurden dann nacheinander unter Rühren jeweils 0,7 g Foam-Star® SI 2180 der Firma BASF SE als Entschäumer und 0,4 g Rheovis® PU 1250 der Firma BASF SE als Verdicker zugegeben.

Zu diesen Mischungen werden dann unter Rühren jeweils 12,2 g Ethylenglykolbutylether als Filmbildehilfsmittel zugegeben. Daran anschließend wurden die jeweiligen Lackformulierungen wenn nötig noch mit einer 10 gew.-%igen wässrigen Ammoniaklösung auf einen pH-Wert von 8,0 bis 8,2 eingestellt. Die so erhaltenen Lackformulierungen wurden noch 5 Minuten weitergerührt. Vor den anwendungstechnischen Prüfungen ließ man die so erhaltenen Lackformulierungen noch wenigstens 1 Stunde ruhen.

Die so aus der wässrigen Polymerisatdispersion P sowie den Polymerisatvergleichsdispersion VP1 und VP2 erhaltenen wässrigen Lackformulierungen werden nachfolgend als Lacke LP (erfindungsgemäß) sowie LVP1 und LVP2 (nicht erfindungsgemäß) bezeichnet.

Anwendungstechnische Prüfungen

Die Prüfung der Chemikalienbeständigkeiten bzw. der Resistenz gegen Fleckenbildung erfolgte auf Testbrettchen, die mit den voran hergestellten Lacken beschichtet wurden. Hierzu wurden auf Testbrettchen aus Buche (funiert) mittels einer Kastenrakel der jeweilige Lack LP sowie LVP1 und LVP2 mit einer Schichtdicke von 150 $\mu$m (nass) aufgerakelt. Anschließend wurden die Testbrettchen für 30 Tage im Normklima (23 °C sowie 50 % relative Luftfeuchtigkeit) getrocknet. Die Prüfung der Chemikalienbeständigkeiten bzw. der Resistenz gegen Fleckenbildung erfolgte nach DIN 68861-1. Dabei wurden mit den Testflüssigkeiten getränkte Filterpapiere (Durchmesser: 3 cm; Flächengewicht: 500 g/m$^2$) auf die zu prüfende Oberfläche gelegt. Zur Unterdrückung der Verdunstung wurden kleine Plastikbecher mit einem Innendurchmesser von 3,5 cm und einer Höhe von 1,5 cm über die Filterpapiere gestellt. Als Testflüssigkeiten wurden Aceton, schwarzer Johannisbeersaft sowie entionisiertes Wasser eingesetzt. Die mit entionisiertem Wasser, schwarzem Johannisbeersaft bzw. Aceton getränkten Filterpapiere wurden dann bei Raumtemperatur auf die lackierten Testbrettchen aufgelegt. Die Einwirkzeit des acetongetränkten Filterpapiers betrug 10 Sekunden, die der mit entionisiertem Wasser und der mit schwarzem Johannisbeersaft getränkten Filterpapiere dagegen 16 Stunden. Für jeden Lack wurden jeweils 3 getränkte Filterpapiere mit den unterschiedlichen Testflüssigkeiten verwendet. Die Veränderung der jeweiligen Lacke wurde nach Entfernung der getränkten Filterpapiere visuell bewertet. Dabei erfolgte die visuelle Bewertung nach folgendem Bewertungs-/Notensystem:

| | |
|---|---|
| Keine sichtbaren Veränderungen in Glanz und Farbe; die Struktur der Prüffläche ist nicht verändert: | Note 5 |
| Gerade noch erkennbare Änderungen in Glanz und Farbe; die Struktur der Prüffläche ist nicht verändert: | Note 4 |
| Leichte Veränderungen in Glanz und Farbe; die Struktur der Prüffläche ist nicht verändert: | Note 3 |
| Starke Veränderungen in Glanz und Farbe; die Struktur der Prüffläche ist nicht verändert: | Note 2 |
| Starke Veränderungen in Glanz und Farbe; die Struktur der Prüffläche ist verändert: | Note 1 |
| Starke Veränderungen in Glanz und Farbe; die Struktur der Prüffläche ist stark verändert: | Note 0 |

Die mit den jeweiligen Lacken LP, LVP1 und LVP2 erhaltenen Ergebnisse sind in nachfolgender Tabelle 1 zusammengefasst.

In einem weiteren Versuch wurden die jeweiligen Lacke LP, LVP1 und LVP2 auf eine Glasplatte in einer Schichtdicke von 150 $\mu$m (nass) aufgerakelt und 48 Stunden bei Raumtemperatur getrocknet. Anschließend wurde visuell die Anzahl der Fehlstellen, genannt "Stippen", auf einer Fläche von 9 cm$^2$ (vor einem weißen Hintergrund) gezählt. Dabei wurden jeweils drei unabhängige Bewertungen durchgeführt. Die entsprechenden - als Mittelwert der drei Bewertungen erhaltenen - Ergebnisse sind ebenfalls in Tabelle 1 dargestellt. Dabei ist ein Lack umso besser zu bewerten, je niedriger die Anzahl der Stippen ist.

Tabelle 1: Ergebnisse der anwendungstechnischen Untersuchungen

| Lack | Wasser | Fleckenbildung schwarzer Johannisbeersaft | Aceton | Anzahl Stippen |
|---|---|---|---|---|
| LP | 4 | 4 | 2 | 17 |
| LVP1 | 3 | 3 | 0 | 11 |
| LVP2 | 3 | 2 | 2 | 150 |

Aus den Ergebnissen ist klar ersichtlich, dass der aus der erfindungsgemäßen wässrigen Polymerisatdispersion

P hergestellte Lackformulierung LP eine gute bis sehr gute Resistenz gegen Fleckenbildung sowie eine geringe Anzahl von Stippen aufweist. Dagegen weist die kalziumhydroxidfreie Lackformulierung zwar gute Resistenz gegen Fleckenbildung durch Wasser und schwarzen Johannisbeersaft sowie eine niedrige Anzahl von Stippen auf, wohingegen die Resistenz gegen die Fleckenbildung durch Aceton stark abfällt. Auch die Lackformulierung LVP2, wobei die Kalziumionen nach der Herstellung der wässrigen Polymerisatvergleichsdispersion VP1 zugegeben wurden, zeigt eine gute bzw. akzeptable Resistenz gegen Fleckenbildung durch Wasser, schwarzen Jahannisbeersaft sowie Aceton; jedoch ist die Anzahl der Stippen nicht akzeptabel. Des Weiteren ist die Koagulatbildung durch Zugabe von Kalziumhydroxid zur wässrigen Polymerisatdispersion nach der Polymerisation nicht akzeptabel.

## Patentansprüche

**1.** Verfahren zur Herstellung einer wässrigen Polymerisatdispersion durch radikalisch initiierte Emulsionspolymerisation, **dadurch gekennzeichnet, dass** wenigstens eine ethylenisch ungesättigte Verbindung (Monomer P) in Anwesenheit eines Copolymerisats A in einem wässrigen Medium radikalisch polymerisiert wird, wobei

a) das Copolymerisat A in einpolymerisierter Form aufgebaut ist aus

| | |
|---|---|
| ≥ 10 und ≤ 50 Gew.-% | wenigstens einer $\alpha,\beta$-monoethylenisch ungesättigten $C_3$- bis $C_6$-Monocarbonsäure (Monomere A1), |
| ≥ 50 und ≤ 90 Gew.-% | wenigstens einer anderen monoethylenisch ungesättigten Verbindung (Monomere A2), |

wobei sich die Mengen der Monomeren A1 und A2 auf 100 Gew.-% (Gesamtmonomerenmenge A) aufsummieren, und wobei

• das Copolymerisat A ein gewichtsmittleres Molekulargewicht im Bereich ≥ 5.000 und ≤ 20.000 g/mol aufweist, wobei die Bestimmung des gewichtsmittleren Molekulargewichts mittels Gelpermeationschromatographie unter Verwendung definierter Polystyrolstandards gelöst in Tetrahydrofuran zur Kalibrierung erfolgt,
• die Art und Mengen der Monomeren A1 und A2 so gewählt werden, dass das erhaltene Copolymerisat A eine Glasübergangtstemperatur Tg gemessen nach DIN EN ISO 11357-2 (2013-09) im Bereich ≥ 70 °C aufweist, und wobei
• das Copolymerisat A vorab der Zugabe und der radikalischen Polymerisation des wenigstens einen Monomeren P in einem wässrigen Medium mit einer Metallverbindung M, ausgewählt aus der Gruppe umfassend Oxide, Hydroxide, Carbonate oder Hydrogencarbonate von Magnesium, Kalzium oder Zink und einer Base B, welche sich von der Metallverbindung M unterscheidet, derart umgesetzt wird, dass
• ≥ 50 mol-% der im Copolymerisat A enthaltenen Carboxygruppen durch die Base B neutralisiert sind, und
• die Menge der Metallverbindung M 0,01 bis 5 Gew.-%, bezogen auf die Menge an Copolymerisat A beträgt,

b) die Art und Menge des wenigstens einen Monomeren P so gewählt wird, dass das erhaltene Dispersionspolymerisat P eine Glasübergangtstemperatur Tg gemessen nach DIN EN ISO 11357-2 (2013-09) im Bereich ≥ - 30 und ≤ 90 °C aufweist, und wobei
c) das Verhältnis der Gewichtsmengen an Copolymerisat A zu dem zur Herstellung des Dispersionspolymerisates P eingesetzten wenigstens einen Monomeren P im Bereich ≥ 15 und ≤ 60 zu ≥ 40 und ≤ 85 liegt.

**2.** Verfahren zur Herstellung einer wässrigen Polymerisatdispersion gemäß Anspruch 1, **dadurch gekennzeichnet, dass** das Copolymerisat A als Monomere A2

| | |
|---|---|
| ≥ 25 und ≤ 90 Gew.-% | wenigstens einer monoethylenisch ungesättigten aromatischen Verbindung (Monomere A2-1), und |
| ≥ 0 und ≤ 65 Gew.-% | wenigstens einer anderen monoethylenisch ungesättigten Verbindung, welche sich von den Monomeren A1 und A2-1 unterscheidet (Monomere A2-2), |

bezogen auf die Gesamtmonomerenmenge A, wobei sich die Mengen der Monomeren A2-1 und A2-2 auf minimal 50 Gew.-% und maximal 90 Gew.-% der Gesamtmonomerenmenge A aufsummieren, in einpolymerisierter Form

enthält.

**3.** Verfahren zur Herstellung einer wässrigen Polymerisatdispersion gemäß Anspruch 2, **dadurch gekennzeichnet, dass** das Copolymerisat A als Monomere A1 Acrylsäure und/oder Methacrylsäure, als Monomere A2-1 Styrol und/oder α-Methylstyrol und als Monomere A2-2 Methylmethacrylat, n-Butylacrylat und/oder 2-Ethylhexylacrylat in einpolymerisierter Form enthält.

**4.** Verfahren zur Herstellung einer wässrigen Polymerisatdispersion gemäß einem der Ansprüche 1 bis 3, **dadurch gekennzeichnet, dass** das Copolymerisat A

| | |
|---|---|
| ≥ 10 und ≤ 45 Gew.-% | Acrylsäure, |
| ≥ 25 und ≤ 65 Gew.-% | Styrol, |
| ≥ 0 und ≤ 40 Gew.-% | α-Methylstyrol, und |
| ≥ 0 und ≤ 65 Gew.-% | Methylmethacrylat, n-Butylacrylat und/oder 2-Ethylhexylacrylat |

in einpolymerisierter Form enthält.

**5.** Verfahren zur Herstellung einer wässrigen Polymerisatdispersion gemäß einem der Ansprüche 1 bis 4, **dadurch gekennzeichnet, dass** als Base B eine organische oder anorganische basische Verbindung mit einem Siedepunkt ≤ 110 °C bei 1,013 bar (absolut) eingesetzt wird.

**6.** Verfahren zur Herstellung einer wässrigen Polymerisatdispersion gemäß einem der Ansprüche 1 bis 5, **dadurch gekennzeichnet, dass** als Base B Ammoniumhydroxid und/oder ein organisches Amin eingesetzt werden.

**7.** Verfahren zur Herstellung einer wässrigen Polymerisatdispersion gemäß einem der Ansprüche 1 bis 6, **dadurch gekennzeichnet, dass** als Metallverbindung M Kalziumhydroxid und/oder Zinkoxid verwendet wird.

**8.** Verfahren zur Herstellung einer wässrigen Polymerisatdispersion gemäß einem der Ansprüche 1 bis 7, **dadurch gekennzeichnet, dass** ≥ 70 mol-% der im Copolymerisat A enthaltenen Carboxygruppen durch die Base B neutralisiert sind.

**9.** Verfahren zur Herstellung einer wässrigen Polymerisatdispersion gemäß einem der Ansprüche 1 bis 8, **dadurch gekennzeichnet, dass** die Menge der Metallverbindung M 0,1 bis 1,0 Gew.-%, bezogen auf die Menge an Copolymerisat A beträgt.

**10.** Verfahren zur Herstellung einer wässrigen Polymerisatdispersion gemäß einem der Ansprüche 1 bis 9, **dadurch gekennzeichnet, dass** verfahrensgemäß keine Dispergierhilfsmittel (Tenside und/oder Schutzkolloide) eingesetzt werden.

**11.** Wässrige Polymerisatdispersion erhältlich nach einem Verfahren gemäß einem der Ansprüche 1 bis 10.

**12.** Polymerisatpulver erhältlich durch Trocknung einer wässrigen Polymerisatdispersion gemäß Anspruch 11.

**13.** Verwendung einer wässrigen Polymerisatdispersion gemäß Anspruch 11 oder eines Polymerisatpulvers gemäß Anspruch 12 als Bindemittel bei der Herstellung von Klebstoffen, Dichtmassen, Kunstharzputzen, Papierstreichmassen, Faservliesen, flexiblen Dachbeschichtungen, Druckfarben und Beschichtungsmitteln sowie bei der Sandverfestigung, als Komponente bei der Herstellung von Textil- oder Lederhilfsmitteln und Schlagzähmodifier oder zur Modifizierung von mineralischen Bindemitteln und Kunststoffen.

**14.** Wässrige Formulierung, enthaltend eine wässrige Polymerisatdispersion gemäß Anspruch 11 oder ein Polymerisatpulver gemäß Anspruch 12 sowie wenigstens ein Pigment und/oder Füllstoff.

**15.** Wässrige Formulierung gemäß Anspruch 14 mit einer Pigmentvolumenkonzentration im Bereich ≥ 1 und ≤ 60 %.

## Claims

1. A process for preparing an aqueous polymer dispersion through free-radical-initiated emulsion polymerization, wherein at least one ethylenically unsaturated compound (monomer P) undergoes free-radical polymerization in the presence of a copolymer A in an aqueous medium, wherein

a) the copolymer A is formed in copolymerized form from ≥ 10% and ≤ 50% by weight of at least one α,β-monoethylenically unsaturated $C_3$ to $C_6$ monocarboxylic acid (monomers A1),

≥ 50% and ≤ 90% by weight of at least one other monoethylenically unsaturated compound (monomers A2), wherein the amounts of monomers A1 and A2 add up to 100% by weight (total amount of monomers A), and wherein
• the copolymer A has a weight-average molecular weight in the range ≥ 5000 and ≤ 20 000 g/mol, wherein the weight-average molecular weight is determined by gelpermeation chromatography using defined polystyrene standards dissolved in tetrahydrofuran for calibration,
• the type and amounts of monomers A1 and A2 are chosen such that the copolymer A obtained has a glass transition temperature Tg measured according to DIN EN ISO 11357-2 (2013-09) in the range ≥ 70°C, and wherein
• before the addition and the free-radical polymerization of the at least one monomer P, the copolymer A is reacted in an aqueous medium with a metal compound M, selected from the group comprising oxides, hydroxides, carbonates or hydrogen carbonates of magnesium, calcium or zinc, and a base B that differs from the metal compound M, such that
• ≥ 50 mol% of the carboxyl groups present in the copolymer A have been neutralized by the base B, and
• the amount of the metal compound M is 0.01% to 5% by weight based on the amount of copolymer A,

b) the type and amount of the at least one monomer P are chosen such that the dispersion polymer P obtained has a glass transition temperature Tg measured in accordance with DIN EN ISO 11357-2 (2013-09) in the range ≥ -30°C and ≤ 90°C, and wherein
c) the ratio of the amounts by weight of copolymer A to the at least one monomer P used to prepare the dispersion polymer P is in the range ≥ 15 and ≤ 60 to ≥ 40 and ≤ 85.

2. The process for preparing an aqueous polymer dispersion according to claim 1, wherein the copolymer A comprises in copolymerized form as monomers A2

≥ 25% and ≤ 90% by weight of at least one monoethylenically unsaturated aromatic compound (monomers A2-1) and
≥ 0% and ≤ 65% by weight of at least one other monoethylenically unsaturated compound that differs from the monomers A1 and A2-1 (monomers A2-2),
based on the total amount of monomers A, wherein the amounts of the monomers A2-1 and A2-2 add up to a minimum of 50% by weight and a maximum of 90% by weight of the total amount of monomers A.

3. The process for preparing an aqueous polymer dispersion according to claim 2, wherein the copolymer A comprises in copolymerized form acrylic acid and/or methacrylic acid as monomers A1, styrene and/or α-methylstyrene as monomers A2-1, and methyl methacrylate, n-butyl acrylate and/or 2-ethylhexyl acrylate as monomers A2-2.

4. The process for preparing an aqueous polymer dispersion according to any of claims 1 to 3, wherein the copolymer A comprises in copolymerized form

| | |
|---|---|
| ≥ 10% and ≤ 45% | by weight of acrylic acid, |
| ≥ 25% and ≤ 65% | by weight of styrene, |

≥ 0% and ≤ 40% by weight of α-methylstyrene, and
≥ 0% and ≤ 65% by weight of methyl methacrylate, n-butyl acrylate and/or 2-ethylhexyl acrylate.

5. The process for preparing an aqueous polymer dispersion according to any of claims 1 to 4, wherein an organic or inorganic basic compound having a boiling point ≤ 110°C at 1.013 bar (absolute) is used as base B.

6. The process for preparing an aqueous polymer dispersion according to any of claims 1 to 5, wherein ammonium hydroxide and/or an organic amine is used as base B.

7. The process for preparing an aqueous polymer dispersion according to any of claims 1 to 6, wherein calcium hydroxide and/or zinc oxide is used as metal compound M.

8. The process for preparing an aqueous polymer dispersion according to any of claims 1 to 7, wherein ≥ 70 mol% of the carboxyl groups present in the copolymer A are neutralized by the base B.

9. The process for preparing an aqueous polymer dispersion according to any of claims 1 to 8, wherein the amount of the metal compound M is 0.1% to 1.0% by weight based on the amount of copolymer A.

10. The process for preparing an aqueous polymer dispersion according to any of claims 1 to 9, wherein, according to the process, no dispersing aids (surfactants and/or protective colloids) are used.

11. An aqueous polymer dispersion obtainable by a process according to any of claims 1 to 10.

12. A polymer powder obtainable by drying an aqueous polymer dispersion according to claim 11.

13. The use of an aqueous polymer dispersion according to claim 11 or of a polymer powder according to claim 12 as a binder in the production of adhesives, sealants, synthetic resin renders, paper coating slips, fiber nonwovens, flexible roof coatings, printing inks, and coating materials and also in sand consolidation, as a component in the production of textile or leather auxiliaries and impact modifiers, or for modification of mineral binders and plastics.

14. An aqueous formulation comprising an aqueous polymer dispersion according to claim 11 or a polymer powder according to claim 12 and at least one pigment and/or filler.

15. The aqueous formulation according to claim 14 having a pigment volume concentration in the range ≥ 1 and ≤ 60%.

**Revendications**

1. Procédé de préparation d'une dispersion aqueuse de polymère par polymérisation en émulsion initiée par voie radicalaire, **caractérisé en ce qu'**au moins un composé éthyléniquement insaturé (monomère P) est polymérisé par voie radicalaire en présence d'au moins un copolymère A dans un milieu aqueux, dans lequel

a) le copolymère A est constitué, sous forme copolymérisée, par

≥ 10 et ≤ 50% en poids d'au moins un acide $C_3$-$C_6$-monocarboxylique éthyléniquement $\alpha$,$\beta$-mono-insaturé (monomères A1),
≥ 50 et ≤ 90% en poids d'au moins un autre composé éthyléniquement mono-insaturé (monomères A2),
la somme des quantités des monomères A1 et A2 valant 100% en poids (quantité totale de monomères A) et

• le copolymère A présentant un poids moléculaire moyen en poids dans la plage ≥ 5000 et ≤ 20.000 g/mole, la détermination du poids moléculaire moyen en poids étant effectuée par chromatographie par perméation de gel avec utilisation d'étalons définis de polystyrène, dissous dans du tétrahydrofuranne pour l'étalonnage,
• le type et les quantités des monomères A1 et A2 étant choisis de telle sorte que le copolymère A obtenu présente une température de transition vitreuse Tg, mesurée selon la norme DIN EN ISO 11357-2 (2013-09), dans la plage ≥ 70°C et dans lequel
• le copolymère A étant transformé avant l'ajout et la polymérisation par voie radicalaire dudit au moins un monomère P dans un milieu aqueux avec un composé métallique M, choisi dans le groupe comprenant les oxydes, les hydroxydes, les carbonates ou les hydrogénocarbonates de magnésium, de calcium ou de zinc et avec une base B qui se distingue du composé métallique M, de telle sorte que
• ≥ 50% en mole des groupes carboxy contenus dans le copolymère A sont neutralisés par la base B et
• la quantité de composé métallique M est de 0,01 à 5% en poids, par rapport à la quantité de copolymère A,

b) le type et la quantité dudit au moins un monomère P sont choisis de telle sorte que le polymère en dispersion P obtenu présente une température de transition vitreuse Tg, mesurée selon la norme DIN EN ISO 11357-2 (2013-09), dans la plage ≥ -30 et ≤ 90°C et dans lequel
c) le rapport des quantités en poids de copolymère A audit au moins un monomère P utilisé pour la préparation du polymère en dispersion P étant situé dans la plage ≥ 15 et ≤ 60 à ≥ 40 et ≤ 85.

**2.** Procédé de préparation d'une dispersion aqueuse de polymère selon la revendication 1, **caractérisé en ce que** le copolymère A contient, sous forme copolymérisée, comme monomères A2

≥ 25 et ≤ 90% en poids d'au moins un composé aromatique éthyléniquement mono-insaturé (monomères A2-1) et
≥ 0 et ≤ 65% en poids d'au moins un autre composé éthyléniquement mono-insaturé qui se distingue des monomères A1 et A2-1 (monomères A2-2),
par rapport à la quantité totale de monomères A, la somme des quantités des monomères A2-1 et A2-2 valant au minimum 50% en poids et au maximum 90% en poids de la quantité totale de monomères A.

**3.** Procédé de préparation d'une dispersion aqueuse de polymère selon la revendication 2, **caractérisé en ce que** le copolymère A contient, sous forme copolymérisée, comme monomères A1, de l'acide acrylique et/ou méthacrylique, comme monomères A2-1, du styrène et/ou de l'α-méthylstyrène et, comme monomères A2-2, du méthacrylate de méthyle, de l'acrylate de n-butyle et/ou de l'acrylate de 2-éthylhexyle.

**4.** Procédé de préparation d'une dispersion aqueuse de polymère selon l'une des revendications 1 à 3, **caractérisé en ce que** le copolymère A contient, sous forme copolymérisée,

≥ 10 et ≤ 45% en poids d'acide acrylique,
≥ 25 et ≤ 65% en poids de styrène,
≥ 0 et ≤ 40% en poids d'α-méthylstyrène et
≥ 0 et ≤ 65% en poids de méthacrylate de méthyle, d'acrylate de n-butyle et/ou d'acrylate de 2-éthylhexyle

**5.** Procédé de préparation d'une dispersion aqueuse de polymère selon l'une des revendications 1 à 4, **caractérisé en ce qu'**on utilise, comme base B, un composé basique organique ou inorganique présentant un point d'ébullition ≤ 110°C à 1,013 bar (absolu).

**6.** Procédé de préparation d'une dispersion aqueuse de polymère selon l'une des revendications 1 à 5, **caractérisé en ce qu'**on utilise, comme base B, de l'hydroxyde d'ammonium et/ou une amine organique.

**7.** Procédé de préparation d'une dispersion aqueuse de polymère selon l'une des revendications 1 à 6, **caractérisé en ce qu'**on utilise, comme composé métallique M, de l'hydroxyde de calcium et/ou de l'oxyde de zinc.

**8.** Procédé de préparation d'une dispersion aqueuse de polymère selon l'une des revendications 1 à 7, **caractérisé en ce que** ≥ 70% en mole des groupes carboxy contenus dans le copolymère A sont neutralisés par la base B.

**9.** Procédé de préparation d'une dispersion aqueuse de polymère selon l'une des revendications 1 à 8, **caractérisé en ce que** la quantité de composé métallique M est de 0,1 à 1,0% en poids, par rapport à la quantité de copolymère A.

**10.** Procédé de préparation d'une dispersion aqueuse de polymère selon l'une des revendications 1 à 9, **caractérisé en ce que** selon le procédé, on n'utilise pas d'adjuvants de dispersion (tensioactifs et/ou colloïdes de protection).

**11.** Dispersion aqueuse de polymère pouvant être obtenue conformément à un procédé selon l'une des revendications 1 à 10.

**12.** Poudre polymère pouvant être obtenue par séchage d'une dispersion aqueuse de polymère selon la revendication 11.

**13.** Utilisation d'une dispersion aqueuse de polymère selon la revendication 11 ou d'une poudre polymère selon la revendication 12 comme liant lors de la fabrication d'adhésifs, de masses de bouchage, d'enduits de résine synthétique, de masses de couchage de papier, de nontissés fibreux, de revêtements souples de toiture, d'encres d'imprimerie et d'agents de revêtement ainsi que lors de la solidification de sable, comme composant lors de la fabrication d'adjuvants pour textiles ou cuirs et de modificateurs de résistance au choc ou pour la modification de liants minéraux et de matériaux synthétiques.

**14.** Formulation aqueuse, contenant une dispersion aqueuse de polymère selon la revendication 11 ou une poudre polymère selon la revendication 12 ainsi qu'au moins un pigment et/ou une charge.

**15.** Formulation aqueuse selon la revendication 14 présentant une concentration volumique en pigments située dans la plage ≥ 1 et ≤ 60%.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2002055563 A
- WO 2017017090 A
- US 4414370 A
- US 4529787 A
- US 4546160 A
- US 9238699 B
- DE 4003422 A
- EP 771328 A
- DE 19624299 A
- DE 19621027 A
- DE 19741184 A
- DE 19741187 A
- DE 19805122 A
- DE 19828183 A
- DE 19839199 A
- DE 19840586 A
- DE 19847115 A
- US 4269749 A
- EP 40419 B
- EP 567812 A
- EP 614922 A
- DE 4213965 A


### In der Beschreibung aufgeführte Nicht-Patentliteratur


- *Encyclopedia of Polymer Science and Engineering,* 1987, vol. 8, 659
- **D.C. BLACKLEY.** *High Polymer Latices,* 1966, vol. 1, 35
- **H. WARSON.** *The Applications of Synthetic Resin Emulsions,* 1972, 246
- **D. DIEDERICH.** *Chemie in unserer Zeit,* 1990, vol. 24, 135-142
- Emulsion Polymerisation. Interscience Publishers, 1965
- **F. HÖLSCHER.** Dispersionen synthetischer Hochpolymerer. Springer-Verlag, 1969
- **HOUBEN-WEYL.** Methoden der organischen Chemie. Georg-Thieme-Verlag, 1961, 411-420
- **HOUBEN-WEYL.** Methoden der organischen Chemie. Georg-Thieme-Verlag, 1961, vol. XIV/1, 192-208
- **J. BRANDRUP ; E.H. IMMERGUT.** Polymerhandbook. John Wiley & Sons, 1989, 133-141
- Encyclopedia of Polymer Science and Technology. John Wiley & Sons Inc, 1966, vol. 5, 847
- Ullmann's Encyclopedia of Industrial Chemistry. Verlag Chemie, 1992, 169
- **FOX.** *T.G. Fox, Bull. Am. Phys. Soc.,* 1956, 123
- **J. BRANDRUP ; E.H. IMMERGUT.** Polymer Handbook. J. Wiley, 1966
- Römpp Chemie Lexikon. Georg Thieme Verlag, 1995